(19) Europäisches Patentamt
European Patent Office
Office européen des brevets

(11) EP 1 614 668 B1

(12) # EUROPEAN PATENT SPECIFICATION

(45) Date of publication and mention of the grant of the patent:
**03.07.2013 Bulletin 2013/27**

(21) Application number: **04714498.5**

(22) Date of filing: **25.02.2004**

(51) Int Cl.:
***C04B 24/16*** *(2006.01)* ***C04B 24/26*** *(2006.01)*
***C08F 290/06*** *(2006.01)*

(86) International application number:
**PCT/JP2004/002208**

(87) International publication number:
**WO 2004/076377 (10.09.2004 Gazette 2004/37)**

(54) **USE OF DISPERSANT FOR HYDRAULIC COMPOSITION**

BENUTZUNG EINES DISPERGIERMITTELS FÜR HYDRAULISCHE ZUSAMMENSETZUNGEN

UTILISATION D'UN DISPERSANT POUR COMPOSITION HYDRAULIQUE

(84) Designated Contracting States:
**DE ES FR GB IT SE**

(30) Priority: **25.02.2003 JP 2003047491**

(43) Date of publication of application:
**11.01.2006 Bulletin 2006/02**

(73) Proprietor: **KAO CORPORATION**
**Tokyo 103-8210 (JP)**

(72) Inventors:
- **SHIBA, Daisuke c/o Kao Corporation Resarch Laborat**
**Wakayama (JP)**
- **YAMATO, Fujio c/o Kao Corporation,Resarch Laborat**
**Wakayama (JP)**

(74) Representative: **HOFFMANN EITLE**
**Patent- und Rechtsanwälte**
**Arabellastrasse 4**
**81925 München (DE)**

(56) References cited:
**EP-A- 0 792 850**
**JP-A- 8 026 793**
**JP-A- 9 040 446**
**JP-A- 11 335 150**
**JP-A- 2001 180 998**
**JP-A- 2001 316 151**
**JP-A- 2004 043 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the invention

The present invention relates to the use of a dispersant for producing a hydraulic composition.

Background of the invention

JP-A 11-268940 discloses a cement admixture combined with a specific polyalkylene glycol (abbreviated hereinafter as PAG) ester copolymer, which exhibits an effect of a lower slump loss at the time of high temperatures and a lower increase in the amount thereof added at the time of low temperatures.
JP-A 11-171619 discloses a cement dispersant combined with a specific PAG ester copolymer, which is excellent in development of early strength with suppressed slump loss.
JP-A 2001-322854 discloses a cement dispersant combined with a specific PAG ester copolymer, which exhibits dispersibility, dispersion retention and initial strength at high levels under various conditions for production of concrete.
JP-A 6-191918 discloses techniques of improving the workability and operativeness of ultrahigh strength concrete having a water/binder ratio of 10 to 30% by a cement dispersant containing a specific PAG ester copolymer.
In JP-A 7-304014, an improvement in slump loss of concrete having a W/C ratio of 32% or less based on (super) rapid-hardening Portland cement is attempted by using a polycarboxylic acid-based dispersant.
EP 1 110 981 A2 describes a concrete admixture comprising a copolymer-mixture obtained by copolymerizing a specific monomer (A) such as an ethylene-based unsaturated carboxylic acid-derivative having a polyoxyalkylene group and a specific monomer (B) such as a (meth)acrylic acid with changing the molar ratio of (A)/(B) at least one time in the polymerization course. A concrete composition comprising said concrete admixture is also described.
EP 0 792 850 A1 describes a cement composition comprising a cement admixture. The cement admixture comprises as a main ingredient thereof: (1) a copolymer (A), or salt thereof (B), of a short-chain polyalkylene glycol (meth)acrylate (a), a long-chain polyalkylene glycol (meth)acrylate (b), a carboxylic acid monomer (c), and a monomer copolymerizable with the monomers mentioned above; (2) a copolymer (A1), or salt thereof (B1), of the monomers (a), (c), and (d) mentioned above; (3) a mixture of a copolymer (A1) or salt (B1) with a known cement admixture; or (4) a polycarboxylic acid based polymer (A3), or salt thereof (B3), with a particular adsorption ratio; or (5) a mixture of said polycarboxylic acid polymer with a known cement dispersant; cement; and water.

Summary of the invention

The present invention, as defined by the claims, relates to the use of a dispersant for poducing a hydraulic composition, which contains first and second copolymers having a structural unit derived from a monomer (a) represented by the general formula (1) below and a structural unit derived from a monomer (b) selected from monomers represented by the general formulae (2-1) and (2-2) below and having Requirements 1 to 3:

Requirement 1:

one of $[n_A]$ x $x_A$ (the product of the average number of moles $[n_A]$ of added alkylene oxides and the acid-type reduced wt% ($x_A$) of (b) relative to the sum total of (a) and (b) in the first copolymer) and $[n_B] \times x_B$ (the product of the average number of moles $[n_B]$ of added alkylene oxides and the acid-type reduced wt% ($x_B$) of (b) relative to the sum total of (a) and (b) in the second copolymer) is in the range of 50 to less than 165 and the other is in the range of 165 to 1000;

Requirement 2:

both of the $x_A$ and $x_B$ are in the range of 2 to 99 wt%;

Requirement 3:

both of the $[n_A]$ and $[n_B]$ are in the range of 5 to 105;

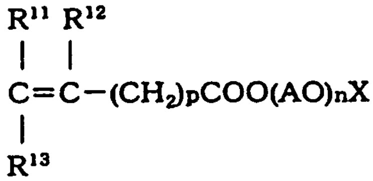

(1)

wherein $R^{11}$ and $R^{12}$ may be the same or different and each represent a hydrogen atom or $-CH_3$.
$R^{13}$ represents a hydrogen atom or $-COO(AO)_mX^{11}$,
X and $X^{11}$ may the same or different and each represent a hydrogen atom or a C1 to C18 alkyl group,
m and n may be the same or different and each represent an integer of 1 or more, and
p represent a number of 0 to 2;

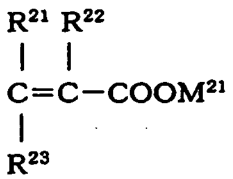

(2-1)

wherein $R^{21}$, $R^{22}$ and $R^{23}$ may be the same or different and each represent a hydrogen atom, $-CH_3$ or $(CH_2)_rCOOM^{22}$, wherein $-CH_3$ or $(CH_2)_rCOOM^{22}$ may form an anhydride with $COOM^{21}$ or other $(CH_2)_rCOOM^{22}$ whereupon $M^{21}$ and $M^{22}$ in these groups are not present,
$M^{21}$ and $M^{22}$ may be the same or different and each represent a hydrogen atom, an alkali metal, an alkaline earth metal, an ammonium group, an alkyl ammonium group or a substituted alkyl ammonium group, and
r represents a number of 0 to 2; and

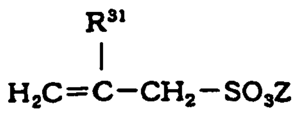

(2-2)

wherein $R^{31}$ represents a hydrogen atom or a methyl group, and
z represents represent a hydrogen atom, an alkali metal, an alkaline earth metal, an ammonium group, an alkyl ammonium group or a substituted alkyl ammonium group.

Detailed description of the invention

When concrete products and civil engineering/building structures are produced or unhardened concrete is poured into a concrete form in a construction site, generally concrete is introduced into the form and simultaneously rigidly set with an internal or external vibrating machine, or concrete is introduced into a form and set rigidly by centrifugal molding to produce piles, poles and fume tubes.

In such field, concrete having excellent workability should be kneaded, and concrete requires stable retention of fluidity and low viscosity particularly within 30 minutes after kneading.

In production of concrete products, concrete within 30 minutes after kneading is charged into a concrete form in many cases, and thus sufficient low viscosity and fluidity are necessary for about 30 minutes after kneading, and thereafter, fluidity is preferably lowered in order to secure finishing operativeness and prevention of bleeding of the fill surface of concrete.

In a construction site where unhardened concrete is poured, on the other hand, kneading conditions are controlled in many cases by observing the fluidized state of concrete about 15 minutes after kneading, in order to secure the state of concrete to be set in the construction site after 1 to 3 hours, and thus the fluidity of concrete after the elapse of a short time after kneading should be stable to the temperature of the concrete material and concrete.

Conventionally, techniques of maintaining fluidity even after the elapse of 30 minutes have been disclosed (JP-A 11-268940 and JP-A 11-171619), but techniques for regulating the fluidity of concrete after the elapse of a predetermined time after kneading are not sufficiently disclosed.

To secure retention of fluidity, a retardant ("Konkurito Konwazai No Kaihatsu Gijyutsu" (Development and Technology of Concrete Admixture), popular edition, pp. 94-107, CMC Inc., 1998) has been used, but the retardant is used mainly for securing retention of fluidity after the elapse of 30 minutes after kneading.

For use in concrete products, however, a rapid reduction in fluidity after the elapse of 30 minutes after kneading is necessary, and hardening is often promoted by steam cure, and thus use of the retardant is not preferable in respect of development of excessive fluidity over a longer time and significant reduction in the strength of steam cure.

In a method of maintaining a fluidized state of concrete excellently before and after 15 minutes after kneading, use of various kinds of high-performance AE water reducing agents is preferable in some cases ("Konkurito Konwazai No Kaihatsu Gijyutsu" (Development and Technology of Concrete Admixture), popular edition, pp. 58-69, CMC Inc., 1998). Particularly, a polycarboxylic acid-based high-performance AE water reducing agent is superior for kneading concrete having a low water/cement ratio (also referred to hereinafter as W/C) necessary for securing the durability of concrete.

However, the present inventors found that some of the conventional polycarboxylic acid-based high-performance AE water reducing agents can secure the required fluidity of concrete products at a predetermined concrete temperature for 30 minutes after kneading and can then reduce the fluidity thereafter, but there is a disadvantage that such performance is significantly changed depending on temperature.

That is, when the concrete temperature is high, the retention of fluidity is rapidly reduced, resulting in failure to maintain the fluidity over about 15 minutes after kneading, whereas when the concrete temperature is low, the dispersibility is rapidly reduced so that given the same kneading time, the fluidity is not sufficiently exhibited, and after kneading, the state of super-dispersion is continued, and after the elapse of 30 minutes after kneading, the fluidity continues to increase, and this tendency is made further significant as W/C is decreased.

As techniques for reducing such dependence on temperature, there are techniques disclosed in JP-A 2001-322854. In a range specifically disclosed therein, however, the change in fluidity retention by temperature cannot be sufficiently suppressed in concrete of lower W/C, and the viscosity cannot be sufficiently reduced.

Conventionally, ultrahigh strength concrete having a water/hydraulic powder ratio (also referred to hereinafter as W/P) of 30 wt% or less (hereinafter, wt% is referred to as %) has been extensively studied, but as properties of hydraulic powder such as silica fume cement are improved in recent years, ultrahigh strength concrete having a water/hydraulic powder ratio of 20% or less is being examined at the practical level (JP-A 6-191918 and JP-A 7-304014).

In the ultrahigh strength concrete having a water/hydraulic powder ratio of 20% or less, a composition containing hydraulic powder of higher than 600 $kg/m^3$, fine aggregate and coarse aggregate should be kneaded with a small amount of water, so use of a dispersant suitable for the hydraulic powder is essential.

However, there is a problem that with respect to fluidity within a short time after kneading, the conventional dispersant for hydraulic powder changes its dispersion power depending on temperature as described above, thus failing to achieve stable workability and operativeness throughout the year.

The amount of a dispersant for hydraulic powder used in ultrahigh strength concrete is higher than in usual concrete having a water/hydraulic powder ratio of 40% or more, and thus the influence of the temperature dependence of its dispersibility is extremely high.

Specifically, there arises a problem that the dispersibility of the dispersant for hydraulic powder is reduced in winter so that when concrete containing the same is discharged after the same kneading time, the discharged concrete continues to disperse, thus leading to super-dispersion and significantly deteriorating the resistance of the concrete material to separation to cause bleeding, or generating water channels upon vibrational setting. In summer, on the other hand, the dispersant for hydraulic powder is poor in the ability to maintain dispersion, and thus reduces its dispersing force during kneading, so the fluidity of discharged concrete containing the same may be significantly lowered. In this case, the chargeability of concrete into a concrete form is deteriorated, and even by vibrational setting, bubbles remain in the surface of the concrete to cause a problem of deterioration in outward appearance.

Under the circumstances described above, the present inventors extensively examined structures of PAG ester copolymers and the effect of a combination thereof, and as a result, they found that the problem of the present invention can be solved by using a combination of specific PAG ester copolymers absent in the prior art.

An object of the present invention is to provide a use for a dispersant capable of endowing ultrahigh strength concrete particularly having a water/hydraulic powder ratio of 40% or less, especially 35% or less, with higher workability and chargeability than conventional, with respect to fluidity within a short time after kneading throughout the year.

In addition to achievement of the object, a further object of the present invention is to secure excellent chargeability by suppressing the viscosity of ultrahigh strength concrete having a lower water/hydraulic powder ratio. A further other object is to improve the outer appearance of an ultrahigh strength concrete product and the finish of its fill surface.

The present invention is excellent in workability of ultrahigh strength concrete.

According to the present invention, use of the dispersant for hydraulic composition can stably endow ultrahigh strength concrete particularly having a water/hydraulic powder ratio of 40% or less, especially 35% or less, with excellent workability and chargeability with respect to fluidity within a short time after kneading, even if its environment, composition etc. are changed.

For kneading ultrahigh strength concrete having a water/hydraulic powder ratio of 40% or less, especially 35% or less (hereinafter referred to merely as ultrahigh strength concrete) in a short time, use of a cement dispersant containing

PAG ester copolymers containing the monomer (a) having strong dispersing force and the monomer (b) is necessary.

For improving the dispersibility and dispersion retention of the dispersant for hydraulic powder and for stabilizing the temperature dependence thereof, a method of using a single component having a single structure, such as in a conventional dispersant for hydraulic powder, cannot deal therewith.

The present inventors paid an attention to [n] $\times$ x, that is, the product of the average number of moles [n] of added alkylene oxides and the acid-type reduced wt% x of the monomer (b) relative to the sum total of the monomers (a) and (b) in the PAG ester copolymer, and the inventors made various examination of a combination of PAG ester copolymers different from each other in the product [n] $\times$ x, and as a result, they revealed that the combination of PAG ester copolymers wherein the product [n] $\times$ x is in a specific relationship (Requirement 1), and simultaneously x is 2 to 99 wt% (Requirement 2) and n is 5 to 105 (Requirement 3), exhibits stable performance with less dependence of dispersing force and dispersion retention on temperature.

The dispersant is produced preferably by the method described above. When the dispersant is produced, it is preferable that out of the copolymers having a structural unit derived from the monomer (a) and a structural unit derived from the monomer (b), the first and second copolymers satisfying the requirements 1 to 3 above are selected, and the first and second copolymers are mixed with each other.

Hereinafter, the monomer (a), monomer (b) and [n] $\times$ x are described in detail.

<Monomer (a)>

The average number of moles [n] of added alkylene oxides in the monomer (a) is described.

As the monomer (a), it is possible to employ a collection of monomers represented by the general formula (I) wherein $R^{11}$ and $R^{12}$ each represent a hydrogen atom or a methyl group, $R^{13}$ represents a hydrogen atom, and the distribution of numbers of moles [n] of added alkylene oxides has a single peak. The average value [n] with respect to the collection is expressed as $n_a$. The starting material of the monomer (a) used in industrially producing the first or second copolymer according to the present invention is usually such a collection. In this case, the average number of moles [n] of the monomer (a) added is referred to as $n_a$.

As the monomer (a), it is also possible to employ a collection of monomers represented by the general formula (I) wherein $R^{11}$ and $R^{12}$ each represent a hydrogen atom or a methyl group, $R^{13}$ represents $COO(AO)_mX^{11}$, and the distribution of the numbers of moles [n, m] of added alkylene oxides has a single peak or different two peaks. The average numbers of m and n with respect to the collection are expressed as $n_a$. In this case, the average number of moles [n] of the monomer (a) added is referred to as $n_a$.

The [n] (that is, [$n_A$] and [$n_B$] ) can be determined by measuring the first or second copolymer using the monomer (a) by $^1$H-NMR. The [n] can also be determined by measuring the monomer (a) by $^1$H-NMR, but the copolymer is preferably measured because of easiness. Also, x (that is, $x_A$, and $x_B$) can be determined by measuring the first or second copolymer by $^1$H-NMR. Measurement by $^1$H-NMR can be conducted for example in the following manner. The copolymer dissolved in water is dried under reduced pressure in a nitrogen atmosphere, and then the resulting dry copolymer is dissolved at a concentration of 3 to 4% in heavy water and measured by $^1$H-NMR. From an integrated value of a peak of alkoxy groups (in this case, methoxy groups) and an integrated value of a peak of alkylene oxide groups, the number of hydrogen atoms in the ethylene oxides in total is determined and then divided by the number of hydrogen atoms contained in one alkylene oxide group, to determine [n] in the copolymer. Specifically, $^1$H-NMR measurement can be conducted by using UNITY-INOVA 500j (500 MHz) manufactured by Varian, under conditions where the number of data points is 64000, the measurement range is 10000.0 Hz, the pulse width (45° pulse) is 60 $\mu$sec., the pulse delay time is 30 sec., and the measurement temperature is 25.0°C.

As the monomer (a), two or more kinds of monomers different in $n_a$ can be simultaneously used. That is, when 'k' kinds of monomers different in $n_a$ are used, $n_a$ in each monomer is expressed as $(n_a)_i$ (i = 1, 2, ... k) and mol% of the $(n_a)_i$ monomer copolymerized is $t_i$, the average number of moles [n] of added alkylene oxides in the monomer (a) is defined by the following equation:

$$[n] \equiv \Sigma(n_a)_i t_i, /\Sigma t_i$$

In equation (1), AOs may be the same as or different from one another. When AOs are different, they may be added at random or in block. All the AOs are preferably ethylene oxides.

Examples of the monomer (a) include esters of (meth)acrylic acid with polyalkylene glycol terminated with a lower alkyl group at one terminal, such as methoxy polyethylene glycol, methoxy polypropylene glycol or ethoxy polyethylene polypropylene glycol, and (meth)acrylic acid/ethylene oxide or propylene oxide adduct, preferably a methoxy polyethylene glycol/(meth)acrylic ester, particularly preferably a methoxy polyethylene glycol/methacrylic acid ester.

In the present invention, both the average numbers of moles [$n_A$] and [$n_B$] of added alkylene oxides in the first and second copolymers are in the range of 5 to 105.

Insofar as both the [$n_A$] and [$n_B$] are in the range of 5 to 105, the number of moles n and m of the monomer (a) added is an integer of 1 or more, but for securing chargeability of ultrahigh strength concrete into a concrete form, the viscosity of concrete after kneading should be suppressed, and for this purpose, the monomers wherein n and m are less than 2 or higher than 105 can be simultaneously used, wherein the ratio of the monomers where n and m are less than 2 or higher than 105 is preferably 20 wt% or less, more preferably 10 wt% or less, still more preferably 5 wt% or less, particularly preferably 1 wt% or less, in the monomers constituting the copolymer.

The distribution of n and m (wt%) in the monomers constituting the copolymer can be measured by mass spectrometry of the copolymer by ESI. The conditions are as follows.

<ESI measurement conditions>

- Mass spectrometer: JMS-SX 102A (JEOL Ltd.)
- Ionization method: Electrospray ionization (ESI)
- Accelerating voltage: 3 kV (positive mode)
- Sample inj. mode: Infusion
- Resolution (set) : 1000
- Scan range (m/z): 10 to 4000
- Integration time: 10 minutes
- Data type: Profile

The sample (copolymer) is dissolved in a methanol/chloroform mixture (1 : 1, weight ratio) containing 2% acetic acid and then measured.

With respect to the [$n_A$] and [$n_B$] (expressed collectively as [n]), the [n] is preferably 100 or less, more preferably 75 or less, still more preferably 50 or less, further more preferably 40 or less, even more preferably 30 or less, even more preferably 25 or less, from the viewpoint of the viscosity of fresh concrete. From the viewpoint of dispersibility, the [n] is preferably 5 or more, more preferably 8 or more.

From the comprehensive viewpoint including the evenness of temperature dependence, the [n] is more preferably 5 to 75, still more preferably 5 to 50, further more preferably 8 to 50, even more preferably 5 to 40, even more preferably 8 to 40, even more preferably 5 to 30, even more preferably 8 to 30, even more preferably 5 to 25, even more preferably 8 to 25.

For securing the chargeability of ultrahigh strength concrete into a concrete form, the viscosity of the concrete after kneading should be suppressed, and for this purpose, monomers having the structure of the monomer (a) wherein $n_a$ is less than 2 or higher than 105 can be simultaneously used, wherein the ratio of the monomers where $n_a$ is less than 2 or higher than 105 is preferably 20 wt% or less, more preferably 10 wt% or less, still more preferably 5 wt% or less, in the monomers constituting the copolymer. In this case too, both the [$n_A$] and [$n_B$] should be in the range of 5 to 105.

<Monomer (b)>

The $x_A$ and $x_B$ (also referred to collectively as x, hereinafter), that is, the acid-type reduced wt% of (b) in the first and second copolymers are in the range of 2 to 99 wt% from the viewpoint of dispersibility and dispersion's retention.

When x is 2 wt% or more, concrete can be sufficiently kneaded with excellent dispersibility at low temperatures or in a low water/hydraulic powder ratio. When x is 99 wt% or less, the fluidity of concrete can be maintained suitably with excellent dispersion retention at high temperatures or in a high W/C ratio.

From the viewpoint described above, the lower limit of x is preferably 5 wt% or more, more preferably 8 wt% or more, while the upper limit of x is more preferably 90 wt% or less, more preferably 70 wt% or less, still more preferably 50 wt% or less, further more preferably 40 wt% or less, even more preferably 35 wt% or less, even more preferably 30 wt% or less, even more preferably 25 wt% or less, even more preferably 20 wt% or less.

From the comprehensive viewpoint, x is preferably 5 to 50 wt%, more preferably 5 to 40 wt%, still more preferably 5 to less than 35 wt%, further more preferably 5 to 30 wt%, even more preferably 8 to 30 wt%, even more preferably 5 to 25 wt%, even more preferably 8 to 25 wt%, even more preferably 8 to 20 wt%.

It is preferable that $x_A$ and $x_B$ satisfy the requirement 1, and one of the two is greater than the other (that is, $x_B < x_A$ or $x_A < x_B$).

The monomer (b) is selected from the monomers represented by formulae (2-1) and (2-2). The monomer represented by the formula (2-1) is preferably an unsaturated monocarboxylic acid monomer such as (meth)acrylic acid,

crotonic acid etc., an unsaturated dicarboxylic acid monomer such as maleic acid, itaconic acid, fumaric acid etc., or a salt thereof, for example an alkali metal salt, an alkaline earth metal salt, an ammonium salt and an amine salt, preferably (meth)acrylic acid or an alkali metal salt thereof, more preferably a sodium salt of (meth)acrylic acid, further more preferably a sodium salt of methacrylic acid. The monomer represented by the formula (2-2) includes (meth)allylsulfonic acid or a salt thereof, for example an alkali metal salt, an alkaline earth metal salt, an ammonium salt or an amine salt, preferably a sodium salt of (meth)allylsulfonic acid, more preferably a sodium salt of methallylsulfonic acid.

From the viewpoint of regulation of the molecular weight of the copolymer, the monomer (b) is preferably monomer(s) represented by formula (2-1) or (2-2) or a mixture of monomers represented by formulae (2-1) and (2-2), or is selected more preferably from monomers represented by formula (2-1), and selection of methacrylic acid is still more preferable.

<First and second copolymers>

The present inventors obtained the following findings with respect to the structure and dispersing performance of the PAG ester polymer.

(1) The PAG ester polymer using the monomers (a) and (b) shows contradictory properties with respect to dispersibility and dispersion retention, wherein the dispersion retention is decreased as the dispersibility is increased, while the dispersion retention is increased as the dispersibility is decreased.

(2) The dispersibility of the PAG ester polymer using the monomers (a) and (b) is related closely to the average number of moles [n] of the monomer (a) and the acid-type reduced wt% x of the monomer (b), and given constant x, the dispersibility is increased as [n] is increased, and given constant [n], the dispersibility is increased as x is increased.

(3) Accordingly, with respect to a certain value of [n] or x, the dispersibility of the PAG ester polymer is correlated with [n] × x, that is, the product of [n] and x. That is, the dispersibility is increased as [n] × x is increased, while the dispersibility is decreased as [n] × x is decreased. PAG ester polymers different in [n] and x but identical in [n] × x exhibit similar dispersibility, and it was thus suggested that when a plurality of PAG ester polymers are simultaneously used, a combination of the polymers different in [n] and x but identical in [n] × x is not always advantageous in designing dispersibility and dispersion retention.

(4) It is accordingly suggested that PAG ester polymer having high dispersibility and low dispersion retention (that is, the polymer having high [n] × x) and PAG ester polymer having low dispersibility and high dispersion retention (that is, the polymer having low [n] × x) can be mixed on the basis of the difference in [n] × x, in order to regulate the dispersibility and dispersion retention of the mixture, and when each polymer has specific dispersibility (that is, specific [n] × x), the fluidity of concrete after a short time after kneading is stabilized regardless of the temperature of concrete material and concrete.

The foregoing findings are described in more detail.

In the present invention, the first and second copolymers containing, as structural units, a structure derived from the monomer (a) and a structure derived from the monomer (b).

In the present invention, one of $[n_A] \times x_A$ (the product of the average number of moles $[n_A]$ of added units in the monomer (a) and the acid-type reduced wt% $x_A$ of the monomer (b) relative to the sum total of the monomers (a) and (b) in the first copolymer) and $[n_B] \times x_B$ (the product of the average number of moles $[n_B]$ of added alkylene glycols and the acid-type reduced wt% $x_B$ of the monomer (b) relative to the sum total of the monomers (a) and (b) in the second copolymer) is in the range of 50 to less than 165, and the other is in the range of 165 to 1000 (Requirement 1).

That is, the first copolymer having a structural unit derived from the monomer (a) and a structural unit derived from the monomer (b), and the second copolymer having a structural unit derived from the monomer (a) and a structural unit derived from the monomer (b) and different from the first copolymer in respect of [n] and/or x, are used in the present invention.

With respect to Requirement 1, when one of the products is 50 or more, the dispersibility of the resulting hydraulic composition is sufficient, and when the other product 1000 or less, the dispersion retention of the hydraulic composition is sufficient, and the fluidity retention within a short time after kneading is stable.

In Requirement 1, the dispersibility is increased as the product is increased, while the fluidity retention is increased as the product is decreased. Accordingly, when the dispersant for hydraulic composition contains a copolymer having a structural unit derived from the monomer (a) and a structural unit derived from the monomer (b) having a single product, the dispersibility and fluidity retention of the copolymer are changed and influenced directly by temperature, and depending on temperature, the dispersibility and fluidity retention are changed similarly to temperature.

Given a hydraulic composition dispersant containing copolymers different in product, however, the change, by temperature, of the dispersibility and dispersion retention of the whole of the dispersant is often significantly relieved

even if the dispersibility and dispersion retention of each copolymer are varied significantly by temperature, and this relieving effect is effectively exhibited when the combination of copolymers different in product has Requirement 1. That is, it was found in the present invention that it is preferable to judge the difference in product by the standard wherein $[n] \times x$ shall be less than 165 and $[n] \times x$ shall be 165 or more.

It does not matter whichever of $[n_A] \times x_A$ or $[n_B] \times x_B$ is greater, but for convenience's sake, the following description is made by reference to the case where $[n_A] \times x_A > [n_B] \times x_B$.

As $[n_B] \times x_B$ is decreased, the fluidity retention is increased while the dispersibility is decreased as described above. It follows that insofar as $[n_B] \times x_B$ is in the range of 50 or more, the dispersibility is not significantly reduced and the dispersibility of the dispersant is sufficient. $[n_B] \times x_B$ is preferably less than 165 in respect of fluidity retention.

On the other hand, as $[n_A] \times x_A$ is increased, the dispersibility is increased while the fluidity retention is decreased. It follows that insofar as $[n_A] \times x_A$ is in the range of 1000 or less, the fluidity retention is not significantly reduced, and the fluidity retention of the dispersant is sufficient. $[n_A] \times x_A$, is preferably 180 or more, more preferably 200 or more, in respect of dispersibility.

From the viewpoint of the effect of suppressing the temperature dependence of the dispersibility and fluidity retention of the whole of the dispersant within a short time after kneading, the upper limit of $[n_B] \times x_B$ and the lower limit of $[n_A] \times x_A$ preferably meet Requirement 1.

$[n_A] \times x_A$ is preferably 180 to 700, more preferably 200 to 700, still more preferably 200 to 500, particularly preferably 250 to 500. With $[n_A] \times x_A$ given in this range, $[n_B] \times x_B$ is preferably 50 to less than 165, still more preferably 70 to 165, further more preferably 100 to less than 165, particularly preferably 130 to less than 165.

From the comprehensive viewpoint of the balance between dispersibility and dispersion retention and evenness of temperature dependence,
it is preferable that $[n_A] \times x_A$ is 180 to 700, and $[n_B] \times x_B$ is 50 to less than 165,
it is more preferable that $[n_A] \times x_A$ is 200 to 700, and $[n_B] \times x_B$ is 50 to less than 165,
it is even more preferable that $[n_A] \times x_A$ is 200 to 500, and $[n_B] \times x_B$ is 50 to less than 165,
it is even more preferable that $[n_A] \times x_A$ is 200 to 500, and $[n_B] \times x_B$ is 70 to less than 165,
it is even more preferable that $[n_A] \times x_A$ is 200 to 500, and $[n_B] \times x_B$ is 100 to less than 165, and
it is even more preferable that $[n_A] \times x_A$ is 200 to 500, and $[n_B] \times x_B$ is 130 to less than 165.

Preferably, the dispersant further has Requirement 4 below.

Requirement 4:

The absolute difference between the $[n_A] \times x_A$ and $[n_B] \times x_B$ (hereinafter, referred to as $\Delta n \times x$) is 20 or more.

Further, $\Delta n \times x$ is preferably 30 or more, more preferably 50 or more, still more preferably 100 or more, further more preferably 130 or more, particularly preferably 150 or more. When $\Delta n \times x$ is too great, the synergistic effect of the functions of the two is reduced so the dispersibility and dispersion retention are reduced, and thus An $\times$ x is preferably 700 or less, more preferably 500 or less, particularly preferably 300 or less.

$[n_A]$ and $[n_B]$ may be the same or different, but in consideration of the dispersibility and dispersion retention for the type of cement, the absolute difference between $[n_A]$ and $[n_B]$ is more preferably 2 or more, still more preferably 5 or more, particularly preferably 8 or more.

From the comprehensive viewpoint, it is preferable that the first copolymer has $[n_A]$ of 17 to 25 and $x_A$ of 12 to 20 wt%, and the second copolymer has $[n_B]$ of 5 to 9 and $x_B$ of 12.5 to 18 wt%, wherein $[n_A]$ and $[n_B]$ are both derived from a monomer (or a monomer mixture) of a $n_a$ value of 25 or less, and it is more preferable that the first copolymer has $[n_A]$ of 17 to 25 and $x_A$ of 12 to 20 wt%, and the second copolymer has $[n_B]$ of 8 to 9 and $x_B$ of 14 to 18 wt%, wherein $[n_A]$ and $[n_B]$ are both derived from a monomer (or a monomer mixture) of a $n_a$ value of 25 or less. These copolymers meet Requirements 1 to 3 of the present invention and further Requirement 4.

The total mount of the monomers (a) and (b) in the monomer mixture constituting the first and second copolymers is 50 wt% or more, more preferably 80 wt% or more, particularly 100 wt%. Other copolymerizable monomers than the monomers (a) and (b) include acrylonitrile, alkyl (meth)acrylate, (meth)acrylamide, styrenesulfonic acid etc.

The copolymers can be produced by known methods. For example, a solution polymerization method in JP-A 11-157897 can be mentioned; briefly, the method involves reaction at 50 to 100°C for 0.5 to 10 hours with sodium sulfite and mercapto ethanol added in the presence of a polymerization initiator such as ammonium persulfate, hydrogen peroxide or the like in water or a C1 to C4 lower alcohol.

The number-average molecular weight of the copolymer (gel permeation chromatography/standard sodium polysulfonate in an aqueous system) is preferably in the range of 10, 000 to 100, 000, particularly preferably 10, 000 to 50,000.

From the viewpoint of concrete viscosity, the average $n_{AV}$ of [n] of the total of the first and second copolymers in the present invention is preferably 40 or less, more preferably 30 or less, still more preferably 25 or less. For example, the first and second copolymers are mixed in the first/second = $W_A/W_B$ wt% (100 wt% in total), the average number $n_{AV}$

of [n] of the whole of the mixture is defined by the following equation:

$$N_{AV} = [[n_A] \times (M_A) + [n_B] \times (M_B)]/[M_A + M_B]$$

wherein $M_A$ is the number of moles of the monomer (a) copolymerized in the first copolymer $W_A$ (g), and $M_B$ is the number of moles of the monomer (a) copolymerized in the second copolymer $W_B$ (g). This $n_{AV}$ can also be calculated from the charging ratio of the first and second copolymers (or the molar ratio of the monomers (a) and (b)), or can be measured by $^1$H-NMR.

In the present invention, two or more kinds of copolymers composed of the monomers (a) and (b) can also be used as the first and second copolymers. For example, copolymer X wherein $[n_A]$ is X and copolymer Y wherein $[n_A]$ is Y can be used as the first copolymer in combination with copolymer Z wherein $[n_B]$ is z as the second copolymer. In this case, at least one of combinations of the first and second copolymers may meet Requirements 1 to 3 in the present invention, and other copolymers are used in such a range that the effect of the present invention is not deteriorated. In this case, the $\Delta n \times x$ should satisfy Requirement 4, further its preferable range, by all the first and second copolymers used.

<Dispersant for hydraulic composition>

In the dispersant, the weight ratio of the first copolymer/second copolymer is preferably 5/95 to 95/5, more preferably 15/85 to 85/15, still more preferably 25/75 to 75/25, further more preferably 30/70 to 70/30. Particularly for improving the dispersibility of a hydraulic composition, the dispersant is regulated preferably such that a copolymer having higher $[n] \times x$ is increased, while for improving the dispersion retention, the dispersant is regulated preferably such that a copolymer having lower $[n] \times x$ is increased. Accordingly, when a polymer having higher $[n] \times x$ is used as the first copolymer, the first copolymer/second copolymer is preferably 70/30 to 50/50, more preferably 70/30 to 60/40, for ultrahigh strength concrete having a W/P of 40% or less, especially 35% or less, in the case where dispersibility is considered important.

In the dispersant, the total content of the first and second copolymers in the whole solids content of the first and second copolymers and other components is preferably 50 wt% or more, more preferably 80 to 100 wt%, still more preferably 90 to 100 wt%. The total amount of the first and second copolymers is also referred to as solids content.

In the dispersant, a separately synthesized polycarboxylic acid copolymer wherein the average number of added alkylene oxides is higher than 105, typically a PAG ester copolymer, can be used in such a range that the effect of the present invention is not deteriorated, wherein the ratio of the polycarboxylic acid copolymer to the total of the first and second copolymers is 20 wt% or less, particularly 10 wt% or less, especially 5 wt% or less, from the viewpoint of concrete viscosity.

The hydraulic composition wherein the dispersant functions well is mortar or concrete containing water, cement and aggregate. The cement includes normal Portland cement, rapid-hardening Portland cement and ultra-rapid-hardening Portland cement, among which rapid-hardening Portland cement is preferable.

As the aggregate, fine aggregate is preferably mountain sand, land sand, river sand or crushed sand, and coarse aggregate is preferably mountain sand, land sand, river sand or crushed sand. Depending on the use, lightweight aggregate may also be used.

The aggregate is preferably fine aggregate having such particle size distribution that the percentage of particles passing through a screen having a nominal dimension of 0.3 mm used in JIS A 1102 (referred to hereinafter as 0.3 mm passage degree) is 1 to less than 10% by weight, and the degree of coarse particles is 2.5 to 3.5 (this fine aggregate is referred to hereinafter as fine aggregate A), in order to maintain the same fluidity as in fine aggregate having standard particle size distribution, particularly where the water/hydraulic powder ratio is in a low, for example the water/hydraulic powder ratio is 40% or less, especially 5 to 40%, more especially 5 to 30%, particularly 5 to 20%.

The fine aggregate A is more preferably aggregate wherein the degree of passage through a screen having a nominal dimension of higher than 0. 3 mm is within the range of standard particle size distribution.

In the present invention, the 0.3 mm passage degree of the fine aggregate A is preferably less than 10%, more preferably 9% or less, still more preferably 7% or less, from the viewpoint of the flow of the hydraulic composition. In respect of the separation resistance of the material in the hydraulic composition, the 0.3 mm passage degree is preferably 1% or more, more preferably 3% or more, still more preferably higher than 5%.

Accordingly, the 0.3 mm passage degree is preferably 1 to 10%, more preferably 3 to 9%, still more preferably 5 to 7%, from the viewpoint of fluidity retention and material separation resistance.

In addition to the requirements described above, the degree of coarse particles (JIS A0203-3019) in the fine aggregate A is preferably 2.5 to 3.5, more preferably 2.6 to 3.3, still more preferably 2.7 to 3.1.

When the degree of coarse particles is 2.5 or more, the viscosity of concrete is reduced, while when the degree

of coarse particles is 3.5 or less, the separation resistance of the material is improved.

The degree of passage of the fine aggregate A through a screen having a nominal dimension of higher than 0.3 mm used in JIS A 1102 is preferably within the range of standard particle sizes in Table 1 in Document 1 attached to JIS A 5308. The degree of passage through a screen having a nominal dimension of higher than 0. 15 mm is more preferably less than 2 wt%, still more preferably less than 1.5 wt%. However, the degree of passage is preferably 0.5 wt% or more from the viewpoint of the separation resistance of the material. A screen having a nominal dimension of higher than 0.3 mm should be the one having degrees of passage within the range of standard particle sizes in one or more nominal dimensions, preferably in all nominal dimensions.

The fine aggregate A used may a suitable combination of known materials such as sand, crushed sand etc. insofar as they satisfy the particle size distribution and the degree of coarse particles described above. The fine aggregate which can be used in the present invention includes river sand in a specific region such as Min River in Fuchien Province in China. Because river sand, mountain sand and crushed sand have fewer pores thus adsorbing less water and can be endowed with fluidity by using a smaller amount of water, these sands are more preferable than sea sand. The specific gravity of fine aggregate A on an oven-dry weight basis (JIS A 0203: number 3015) is preferably 2.56 or more.

The hydraulic composition may contain blast furnace slag, fly ash, silica fume etc., as hydraulic powder other than cement, and may also contain fine powder of non-hydraulic limestone. Silica fume cement or blast furnace cement mixed with cement may also be used. When hydraulic powder and non-hydraulic powder are contained in the hydraulic composition, these powders are hereinafter referred to as hydraulic powder.

From the viewpoint of the fluidity of the hydraulic composition after kneading, it is more preferable that the hydraulic powder other than cement contains silica fume.

The dispersant is used preferably in a hydraulic composition of low water/hydraulic powder ratio, such as ultrahigh strength concrete etc. From the viewpoint of kneading of the hydraulic composition and development of strength, the water/hydraulic powder ratio of the hydraulic composition is preferably 40% or less, more preferably 5 to 40%, still more preferably 5 to 30%, particularly preferably 5 to 20%.

From the viewpoint of kneading and development of strength, the cement/silica fume ratio by weight in the hydraulic composition containing silica fume is preferably 97/3 to 80/20, more preferably 95/5 to 85/15, and the total of cement and silica fume is preferably 400 to 1300 (kg/$m^3$), more preferably 500 to 900 (kg/$m^3$). In consideration of development of strength, water/(cement + silica fume) $\times$ 100 (weight ratio) is preferably 10 to 20.

Particularly in consideration of development of strength, the cement under the conditions described above is preferably rapid-hardening Portland cement.

The hydraulic composition using the dispersant of the present invention can be produced by mixing hydraulic powder, preferably cement and aggregate and if necessary at least one kind of fine powder selected from blast furnace slag, fly ash, silica fume etc., with the dispersant and kneading water in the presence of other additives such as a defoaming agent etc. In ultrahigh strength concrete having W/P of 40% or less, particularly 35% or less, especially 30% or less, at least one kind of fine powder selected from blast furnace slag, fly ash, silica fume etc. is preferably contained, among which silica fume is particularly preferably contained.

In this case, the first and second copolymers, in a previously mixed form, may be added to and mixed with the materials other than the dispersant, or the first and second copolymers may be separately added to and mixed therewith, and from the viewpoint of effect development and easy handling, it is preferable to previously mix the first and second copolymers. The dispersant may be used after incorporation of other additives such as a defoaming agent and/or water, and these additives are preferably contained from the viewpoint of easy handling. Further, the dispersant may be previously mixed with kneading water before use. From the viewpoint of uniform mixing of the hydraulic composition, it is preferable that the dispersant is previously mixed with kneading water before use.

In the case of ultrahigh strength concrete having W/P of 40% or less, particularly 35% or less, especially 30% or less, it is preferable that before the dispersant and if necessary other additives such as a defoaming agent etc. and kneading water (hereinafter referred to collectively as liquid material) are mixed, the materials other than the liquid material are mixed for 30 seconds or more by a mixer, and thereafter, the liquid material is added thereto and mixed preferably for 3 minutes or more, or for 5 minutes or more in the case where W/P is 30% or less. After the liquid material is added, mixing may be finished when the mixture becomes a necessary slump or a slump flow, but from the viewpoint of productivity, mixing is conducted preferably for a period within 10 minutes. In the present invention, ultrahigh strength concrete having excellent dispersion retention can be obtained for a kneading time within 10 minutes by using the dispersant of the present invention.

Molded products of such hydraulic composition include, for example, vibrated molded products such as culverts, side ditches and segments and centrifuged molded products such as poles, piles and fume tubes, and by using the dispersant, excellent operativeness and excellent strength and durability can be attained throughout the year. In the vibrated molded products, the surface thereof charged into a concrete form is finished smoothly to attain a beautiful outward appearance. For the centrifuged molded products, those excellent in chargeability can be obtained.

As preferable conditions of centrifugal molding using ultrahigh strength concrete having a water/hydraulic powder ratio of 20% or less, the slump value is 10 cm or less, preferably 5 cm or less, still more preferably 2 cm or less. When the slump value is 10 cm or less, chargeability into a concrete form and moldability are excellent, dropping and sagging of the internal surface are prevented, and the smoothness of the internal surface is improved.

As the condition for centrifugal molding of such ultrahigh strength concrete, about 13 to 40 minutes are necessary at 2 to 40 G, for example 5 to 15 minutes at 2 to 5 G, or 3 to 10 minutes at a middle rate of 10 to 20 G, or 5 to 15 minutes at a high rate of 30 to 40 G, and particularly conditions under which the time is prolonged at a lower rate than usual are preferable.

The steam cure conditions in the case of centrifugal molding under such conditions are usually as follows: the concrete is left preliminarily for 1 to 4 hours after molding, then heated at 10 to 30°C/hr, kept at 60 to 80°C for 2 to 8 hours, and then naturally cooled.

When strength on Day 1 to 3 after centrifugal molding under such conditions is to be increased, it is preferable that the concrete is preliminarily left for 1 to 2 hours, then heated at a rate of 20 to 30°C/hr, kept at 70 to 80°C for 6 to 8 hours, and then naturally dried. When strength on Day 14 or thereafter is to be increased, it is preferable that the concrete is preliminarily left for 3 to 4 hours, heated at a rate of 10 to 20°C/hr, kept at 60 to 70°C for 2 to 4 hours, and then naturally dried.

The dispersant for hydraulic powder is used preferably in an amount of preferably 0.01 to 5 wt%, more preferably 0.05 to 3 wt%, in terms of solids content relative to hydraulic powder. Accordingly, the hydraulic composition contains the dispersant preferably in an amount of 0.01 to 5 wt% in terms of solids content relative to 100 wt% hydraulic powder. As used herein, the solids content is the amount of the first and second copolymers in total.

In the hydraulic composition, various admixing materials such as a slag-reducing material, a rapid-hardening material etc. can be used. Further, known additives (materials) such as an AE agent, an AE water reducing agent, a high-performance water reducing agent, a water reducing agent, a retardant, a rapid-hardening material, an accelerator, a frothing agent, a foaming agent, a defoaming agent, a thickener, a waterproofing agent and a preservative can be simultaneously used.

Brief description of the drawings

Fig. 1 is a schematic view showing an apparatus used in measurement of dropping time for evaluation of viscosity in the Examples; and

Fig. 2 is a schematic view showing an apparatus used in measurement of introduction time for evaluation of chargeability in the Examples.

In the figures, 1 is an upper introduction opening, and 2 is a lower discharge opening.

The following examples show embodiments of the present invention. The examples are given for illustrative purposes only and not intended to restrict the present invention.

Examples

<Fine aggregate>

In the Examples below, the following S1 and S2 were used as fine aggregate.

S1: Fine aggregate, mountain sand from Kimitsu in Chiba Pref., a surface dry specific gravity of 2.63.

S2: Fine aggregate, river sand from Min River, Fuchien Province, China, a surface dry specific gravity of 2.63.

Table 1a

| | Area of production | Degree of passage (%) Screen nominal dimension (mm) | | | | | | | Degree of coarse particles | Absolute dry specific gravity | Surface dry specific gravity | Result(%) of particle shape judgment |
|---|---|---|---|---|---|---|---|---|---|---|---|---|
| | | 10 | 5 | 2.5 | 1.2 | 0.6 | 0.3 | 0.15 | | | | |
| S1 | Mountain sand from Kimitsu in Chiba Pref. | 100 | 95.3 | 89.1 | 78.0 | 58.0 | 27.4 | 2.8 | 2.50 | 2.56 | 2.63 | 57.9 |
| S2 | River sand from Min River, Fuchien Province, China | 100 | 99.2 | 95.5 | 81.5 | 45.5 | 6.7 | 1.2 | 2.81 | 2.56 | 2.63 | 61.8 |
| Standard particle size distribution | | 100 | 90~100 | 80~100 | 50~90 | 25~65 | 10~35 | 2~10 | | | | |

<Example 1>

<<Concrete materials>>

Using the following concrete materials, concrete was produced according to the formulation in Table 1b. This example is an example of a composition for use in a freshly mixed concrete/concrete vibrational molded product.
W: Tap water mixed with the cement dispersant.
C: Normal Portland cement (Taiheyo Cement Co. , Ltd.), surface dry specific gravity = 3.16
SFC: silica fume cement [Ube Mitsubishi Cement Co., Ltd.], surface dry specific gravity = 3.08
BFS: Fine powder of blast furnace slag [Esmentsuper 60, Shin-Nittesu Koro Cement Co., Ltd.], surface dry specific gravity = 2.89
S1: Fine aggregate, mountain sand from Kimitsu in Chiba Pref., surface dry specific gravity = 2.63
G: Coarse aggregate, gravel G2013 from Wakayama Pref., surface dry specific gravity = 2.62

$$W/P:\ [W/(C + BFS + SFC)] \times 100\ (\%,\ weight\ ratio)$$

$$s/a:\ [S/(S + G)] \times 100\ (\%,\ volume\ ratio)$$

Amount of air: 2%

Table 1b

| Formulation | W/P (%, weight ratio) | s/a (%, volume ratio) | Unit weight (kg/m$^3$) | | | | | |
|---|---|---|---|---|---|---|---|---|
| | | | W | C | SFC | BFS | S1 | G |
| Surface dry specific gravity | - | - | 1.00 | 3.16 | 3.08 | 2.89 | 2.63 | 2.62 |
| W/P=35(A) | 35.0 | 52.0 | 160 | 250 | 0 | 207 | 916 | 842 |
| W/P=25(A) | 25.0 | 41.5 | 160 | 0 | 640 | 0 | 668 | 938 |
| W/P=20(A) | 20.0 | 36.5 | 160 | 0 | 800 | 0 | 538 | 932 |
| W/P=15(A) | 15.0 | 31.5 | 160 | 0 | 1000 | 0 | 410 | 889 |

<<Cement dispersant>>

Using the monomers (a) and (b) in Table 2, the copolymers in Table 2 were produced and then combined as shown in Table 3 to give cement dispersants. Each of the resulting dispersants was used to produce concrete in the following manner, and the viscosity, dispersibility, trowel finish and dispersion retention in each formulation were evaluated. The results are shown in Tables 4 to 10.

Table 2

| Copolymer | | | | | | | | | | | | | | | | | |
|---|---|---|---|---|---|---|---|---|---|---|---|---|---|---|---|---|---|
| No. | Monomer (a): methoxy (EO)n methacrylate | | | | | | | | Monomer (b): MAA-Na | | Monomer (b): MSA-Na | | Others | | [n] | x | [n] * x | Mw |
| | Structure in the formula (1) | | | | | | Mw | Mol % | Molecular weight of acid type | Mol % | Molecular weight of acid type | mol % | Kind | Mol % | | | | |
| | $R^{11}$ | $R^{12}$ | $R^{13}$ | p | X | $n_a$ | | | | | | | | | | | | |
| C1 | H | $CH_3$ | H | 0 | $CH_3$ | 4 | 276 | 55.5 | 86 | 44.5 | - | - | | - | 4 | 20.0 | 80.0 | 11000 |
| C2 | H | $CH_3$ | H | 0 | $CH_3$ | 5 | 320 | 75 | 86 | 25 | - | - | - | - | 5 | 8.2 | 41.0 | 13000 |
| C3 | H | $CH_3$ | H | 0 | $CH_3$ | 5 | 320 | 62 | 86 | 38 | - | - | - | - | 5 | 14.1 | 70.5 | 22000 |
| C4 | H | $CH_3$ | H | 0 | $CH_3$ | 7 | 408 | 45 | 86 | 55 | - | - | - | - | 7 | 20.5 | 143.5 | 20000 |
| C5 | H | $CH_3$ | H | 0 | $CH_3$ | 9 | 496 | 25 | 86 | 75 | - | - | - | - | 9 | 34.2 | 307.8 | 38000 |
| C6 | H | $CH_3$ | H | 0 | $CH_3$ | 9 | 496 | 45 | 86 | 55 | - | - | - | - | 9 | 17.5 | 157.5 | 33000 |
| C7 | H | $CH_3$ | H | 0 | $CH_3$ | 9 | 496 | 50 | 86 | 40 | 136 | 10 | - | - | 9 | 16.2 | 145.8 | 63000 |
| C8 | H | $CH_3$ | H | 0 | $CH_3$ | 23 | 1112 | 15 | 86 | 50 | - | - | - | - | 9.7 | 14.0 | 135.8 | 12000 |
| | H | $CH_3$ | H | 0 | $CH_3$ | 4 | 276 | 35 | | | | | | | | | | |
| C9 | H | $CH_3$ | H | 0 | $CH_3$ | 30 | 1420 | 30 | 86 | 65 | - | - | - | - | 26.7 | 11.1 | 296.4 | 58000 |
| | H | $CH_3$ | H | 0 | $CH_3$ | 7 | 408 | 5 | | | | | | | | | | |
| C10 | H | $CH_3$ | H | 0 | $CH_3$ | 10 | 540 | 39.1 | 86 | 60.9 | - | - | - | - | 10 | 19.9 | 199.0 | 34000 |
| C11 | H | $CH_3$ | H | 0 | $CH_3$ | 18 | 892 | 37 | 86 | 63 | - | - | - | - | 18 | 14.1 | 253.8 | 21000 |
| C12 | H | $CH_3$ | H | 0 | $CH_3$ | 25 | 1200 | 33.2 | 86 | 66.8 | - | - | - | - | 25 | 12.6 | 315.0 | 39000 |
| C13 | H | $CH_3$ | H | 0 | $CH_3$ | 26 | 1244 | 25 | 86 | 75 | - | - | - | - | 26 | 17.2 | 447.2 | 28000 |
| C14 | H | $CH_3$ | H | 0 | $CH_3$ | 33 | 1552 | 37 | 86 | 63 | - | - | - | - | 33 | 8.6 | 283.8 | 44000 |
| C15 | H | $CH_3$ | H | 0 | $CH_3$ | 45 | 2080 | 30 | 86 | 70 | - | - | - | - | 45 | 8.8 | 396.0 | 50000 |
| C16 | H | $CH_3$ | H | 0 | $CH_3$ | 60 | 2740 | 30 | 86 | 70 | - | - | - | - | 60 | 6.8 | 408.0 | 43000 |
| C17 | H | $CH_3$ | H | 0 | $CH_3$ | 70 | 3180 | 30 | 86 | 70 | - | - | - | - | 70 | 5.9 | 413.0 | 48000 |
| C18 | H | $CH_3$ | H | 0 | $CH_3$ | 80 | 3620 | 25 | 86 | 75 | - | - | - | - | 80 | 6.7 | 536.0 | 45000 |
| C19 | H | $CH_3$ | H | 0 | $CH_3$ | 90 | 4060 | 20 | 86 | 80 | - | - | - | - | 90 | 7.8 | 702.0 | 48000 |

(continued)

| Copolymer | | | | | | | | | | | | | | | | | | |
|---|---|---|---|---|---|---|---|---|---|---|---|---|---|---|---|---|---|---|
| No. | Monomer (a): methoxy (EO)n methacrylate | | | | | | | | Monomer (b): MAA-Na | | Monomer (b): MSA-Na | | Others | | [n] | x | [n] * x | Mw |
| | Structure in the formula (1) | | | | | | Mw | Mol % | Molecular weight of acid type | Mol % | Molecular weight of acid type | mol % | Kind | Mol % | | | | |
| | $R^{11}$ | $R^{12}$ | $R^{13}$ | p | X | $n_a$ | | | | | | | | | | | | |
| C20 | H | $CH_3$ | H | 0 | $CH_3$ | 105 | 4720 | 15 | 86 | 85 | - | - | - | - | 105 | 9.4 | 987.0 j | 51000 |
| C21 | H | $CH_3$ | H | 0 | $CH_3$ | 75 | 3400 | 10 | 86 | 65 | 136 | 10 | MAC | 15 | 75 | 16.5 | 1237.5 | 59000 |
| C22 | H | $CH_3$ | H | 0 | $CH_3$ | 120 | 5380 | 20 | 86 | 80 | - | - | - | - | 120 | 6.0 | 720.0 | 61000 |
| C23 | H | $CH_3$ | H | 0 | $CH_3$ | 9 | 496 | 20 | 86 | 80 | - | - | - | - | 9 | 41.0 | 369.0 | 40000 |

Note: *Mw is weight-average molecular weight. MAA is methacrylic acid, MAA-Na refers to a product of MAA neutralized with sodium hydroxide to a neutralization degree of 60 $\pm$ 10% after copolymerization reaction (hereinafter, MAA-Na refers to this product). MSA-Na is sodium methallylsulfonate, and MAC is methyl acrylate.

Table 3

| | | Dispersant No. | First copolymer | | Second copolymer | | First/second weight ratio | Δn*x | $n_{AV}$ | $x_{AV}$ |
|---|---|---|---|---|---|---|---|---|---|---|
| | | | No. | [n]*x | No. | [n]*x | | | | |
| Comparative product | 1-1 | D1' | C10 | 199.0 | C2 | 41.0 | 65/35 | 158.0 | 7.4 | 15.8 |
| Product of the invention | 1-1 | D1 | C10 | 199.0 | C3 | 70.5 | 65/35 | 128.5 | 7.5 | 17.9 |
| | 1-2 | D2 | C5 | 307.8 | C3 | 70.5 | 65/35 | 237.3 | 6.8 | 31.6 |
| | 1-3 | D3 | C12 | 315.0 | C3 | 70.5 | 65/35 | 244.5 | 11.7 | 13.1 |
| | 1-4 | D4 | C12 | 315.0 | C4 | 143.5 | 65/35 | 171.5 | 14.4 | 15.4 |
| | 1-5 | D5 | C12 | 315.0 | C6 | 157.5 | 65/35 | 157.5 | 16.2 | 14.3 |
| | 1-6 | D6 | C12 | 315.0 | C7 | 145.8 | 65/35 | 169.2 | 16.1 | 13.9 |
| | 1-7 | D7 | C9 | 340.6 | C8 | 135.8 | 65/35 | 204.8 | 17.3 | 12.1 |
| Comparative product | 1-2 | D2' | C12 | 315.0 | C10 | 199.0 | 65/35 | 116.0 | 17.2 | 15.2 |
| | 1-3 | D3' | C21 | 1237.5 | C6 | 157.5 | 65/35 | 1080.0 | 23.2 | 16.9 |
| | 1-4 | D4' | C10 | 199.0 | C1 | 80.0 | 65/35 | 119.0 | 6.9 | 19.9 |
| Product of the invention | 1-8 | D8 | C11 | 253.8 | C6 | 157.5 | 65/35 | 96.3 | 13.7 | 15.3 |
| | 1-9 | D9 | C14 | 283.8 | C6 | 157.5 | 65/35 | 126.3 | 18.5 | 11.7 |
| | 1-10 | D10 | C15 | 396.0 | C6 | 157.5 | 65/35 | 238.5 | 20.8 | 11.8 |
| | 1-11 | D11 | C16 | 408.0 | C6 | 157.5 | 65/35 | 250.5 | 23.0 | 10.5 |
| | 1-12 | D12 | C17 | 413.0 | C6 | 157.5 | 65/35 | 255.5 | 24.1 | 10 |
| | 1-13 | D13 | C18 | 536.0 | C6 | 157.5 | 70/30 | 378.5 | 27.9 | 9.9 |
| | 1-14 | D14 | C19 | 702.0 | C6 | 157.5 | 70/30 | 544.5 | 28.6 | 10.7 |
| | 1-15 | D15 | C20 | 987.0 | C6 | 157.5 | 70/30 | 829.5 | 29.4 | 11.8 |
| Comparative product | 1-5 | D5' | C22 | 720.0 | C6 | 157.5 | 90/10 | 562.5 | 62.9 | 7.2 |
| Product of the invention | 1-16 | D16 | C23 | 369.0 | C4 | 143.5 | 65/35 | 225.5 | 8.1 | 33.8 |

Note: $n_{AV}$ is the average number of n in the whole of the first and second copolymers, and $x_{AV}$ is the average number of x in the whole of the first and second copolymers (hereinafter, this definition applies).

<<Conditions for production of concrete>>

The amount of the concrete materials kneaded was 40 L, and depending on W/P, concrete was produced in the following manner.

(1) Concrete having a W/P ratio of 35 (%)

Concrete materials other than water, mixed with the cement dispersant, are introduced into a 60-L forced action twin-screw mixer, kneaded for 10 seconds, and water mixed with the cement dispersant is introduced into it, and the mixture is kneaded for 90 seconds and then discharged.

(2) Concrete having a W/P ratio of 25, 20 or 15 (%)

Water mixed with the cement dispersant, and concrete materials other than coarse aggregate, are introduced into a 60-L forced action twin-screw mixer and kneaded for 10 seconds, and water mixed with the cement dispersant is introduced into it and kneaded for 90 seconds, and thereafter, coarse aggregate is introduced into it and kneaded for 60 seconds, and the mixture is discharged.

<<Viscosity>>

An apparatus having the shape in Fig. 1 with its lower discharge opening closed, produced by processing stainless steel (SUS304), was charged with the mortar 10 minutes after kneading, and the mortar was cut along a face of an upper introduction opening. The mortar was gravity-dropped by opening the lower discharge opening, and when observed from the upper introduction opening, the time (dropping time) having elapsed until a hole was recognized in at least a part of the mortar was measured and expressed as a measure of viscosity. A shorter dropping time is indicative of a lower viscosity of the mortar. In the case of concrete, the mortar is the one obtained by separating and removing aggregate from the concrete through a screen having 5-mm openings.

<<Dispersibility>>

The amount (solids content) of the first and second copolymers in total required to be added for the slump flow value of concrete just after kneading (Concrete Library 93: Highly Fluidic Concrete Operation Guideline, pp. 160-161, Civil Engineering Society) to become 65±1 cm was expressed relative to the weight of hydraulic powder (P) of the dispersant and used as a measure of the dispersibility of concrete. A smaller amount of the copolymers added is indicative of higher dispersibility. The amount of initial air was regulated in the range of 2% or less by an entraining agent Mighty AE-03 manufactured by Kao Corporation) and a defoaming agent (Antifoam E-20 manufactured by Kao Corporation).

<<Dispersion retention>>

The percentage of the slump value after 15, 30 and 45 minutes since kneading was initiated, was expressed relative to the slump flow value just after kneading, and used as a measure of dispersion retention. A higher value is indicative of higher dispersion retention.

In this evaluation, it is preferable that the dispersion retention after 15 minutes is 85 to less than 105%, the dispersion retention after 30 minutes is 70 to 100%, and the dispersion retention after 45 minutes is 90% or less. When the dispersion retentions after 15 minutes and 30 minutes are less than 85% and less than 70%, respectively, the chargeability of concrete is lowered, and when the dispersion retentions after 15 minutes and 30 minutes are higher than 105% and higher than 100%, respectively, the coarse aggregate may be separated from the mortar upon vibration. When the retention after 45 minutes is higher than 90%, trowel finish after charging is not feasible, and the workability is deteriorated.

<Trowel finish>

A steel concrete form of length 30 cm × width 150 cm × height 30 cm is filled with concrete just after kneading. 60 minutes after kneading is initiated, the following operation is conducted.
(1) The fill surface is made even by a trowel.
(2) The fill surface of the concrete is brushed evenly with a rake having a row of teeth at 3-mm intervals. The operation (1) and (2) is conducted within 5 minutes.
(3) 15 minutes after brushing, the brushed part is observed.
(4) When the rough surface by brushing is formed on the whole of the brushed part, the trowel finish is regarded as good (⊙) ; when the rough surface is formed on half or more of the brushed part, the trowel finish is regarded as slightly good (○) ; when the rough surface is less than half of the brushed part, the trowel finish is regarded as inferior (×). In the case of ×, bleeding may occur, a longer time may be required in trowel finish, and if bleeding occurs after trowel finish, the finish surface after hardening may not be even.

Table 4

| | | Dispersant No. | Dropping time (second) | | | |
|---|---|---|---|---|---|---|
| | | | W/P=35(A) | W/P=25(A) | W/P=20(A) | W/P=15(A) |
| Comparative example | 1-1 | D1' | 11.2 | 17.3 | 25.3 | 39.0 |
| Example | 1-1 | D1 | 11.5 | 16.9 | 25.2 | 39.0 |
| | 1-2 | D2 | 11.0 | 17.0 | 25.1 | 38.8 |
| | 1-3 | D3 | 11.8 | 18.8 | 27.0 | 41.8 |
| | 1-4 | D4 | 12.4 | 19.2 | 27.8 | 42.5 |
| | 1-5 | D5 | 13.0 | 19.8 | 27.5 | 42.3 |
| | 1-6 | D6 | 13.5 | 20.5 | 28.6 | 43.3 |
| | 1-7 | D7 | 13.9 | 20.8 | 28.9 | 44.0 |
| Comparative example | 1-2 | D2' | 12.6 | 19.2 | 27.3 | 41.9 |
| | 1-3 | D3' | 17.6 | 28.0 | 39.1 | 58.4 |
| | 1-4 | D4' | 11.0 | 18.6 | 27.3 | 40.8 |
| Example | 1-8 | D8 | 12.5 | 20.0 | 28.7 | 43.9 |
| | 1-9 | D9 | 13.6 | 21.5 | 30.1 | 46.0 |
| | 1-10 | D10 | 14.8 | 23.0 | 32.6 | 50.8 |
| | 1-11 | D11 | 16.0 | 25.1 | 35.0 | 54.2 |
| | 1-12 | D12 | 16.4 | 25.4 | 35.2 | 55.5 |
| | 1-13 | D13 | 17.9 | 27.6 | 38.6 | 59.2 |
| | 1-14 | D14 | 18.3 | 27.8 | 38.6 | 60.0 |
| | 1-15 | D15 | 20.8 | 29.7 | 41.5 | 65.1 |
| Comparative Example | 1-5 | D5' | 23.0 | 32.2 | 44.8 | 69.9 |
| Example | 1-16 | D16 | 12.0 | 19.0 | 26.8 | 40.7 |

Table 5

| | | Dispersant No. | Addition amount (weight-%) | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10℃ | 20℃ | 30℃ | 10℃ | 20℃ | 30℃ | 10℃ | 20℃ | 30℃ | 10℃ | 20℃ | 30℃ |
| Comparative example | 1-1 | D1' | 0.25 | 0.25 | 0.3 | 0.29 | 0.29 | 0.33 | 0.36 | 0.36 | 0.39 | 0.48 | 0.48 | 0.52 |
| Example | 1-1 | D1 | 0.24 | 0.24 | 0.27 | 0.28 | 0.28 | 0.3 | 0.33 | 0.33 | 0.37 | 0.44 | 0.44 | 0.46 |
| | 1-2 | D2 | 0.23 | 0.23 | 0.25 | 0.27 | 0.27 | 0.28 | 0.32 | 0.31 | 0.34 | 0.42 | 0.42 | 0.44 |
| | 1-3 | D3 | 0.23 | 0.23 | 0.24 | 0.25 | 0.25 | 0.26 | 0.3 | 0.3 | 0.32 | 0.4 | 0.4 | 0.43 |
| | 1-4 | D4 | 0.23 | 0.23 | 0.24 | 0.24 | 0.24 | 0.26 | 0.29 | 0.29 | 0.31 | 0.39 | 0.39 | 0.42 |
| | 1-5 | D5 | 0.22 | 0.22 | 0.23 | 0.24 | 0.24 | 0.25 | 0.28 | 0.28 | 0.3 | 0.38 | 0.38 | 0.4 |
| | 1-6 | D6 | 0.23 | 0.23 | 0.24 | 0.25 | 0.26 | 0.26 | 0.29 | 0.29 | 0.31 | 0.39 | 0.39 | 0.42 |
| | 1-7 | D7 | 0.23 | 0.23 | 0.24 | 0.25 | 0.25 | 0.26 | 0.29 | 0.29 | 0.31 | 0.4 | 0.4 | 0.44 |
| Comparative example | 1-2 | D2' | 0.23 | 0.23 | 0.25 | 0.27 | 0.27 | 0.28 | 0.32 | 0.31 | 0.34 | 0.44 | 0.44 | 0.46 |
| | 1-3 | D3' | 0.22 | 0.2 | 0.19 | 0.27 | 0.23 | 0.22 | 0.3 | 0.28 | 0.27 | 0.44 | 0.44 | 0.4 |
| | 1-4 | D4' | 0.28 | 0.28 | 0.34 | 0.32 | 0.32 | 0.36 | 0.44 | 0.44 | 0.5 | 0.58 | 0.58 | 0.6 |
| Example | 1-8 | D8 | 0.22 | 0.22 | 0.23 | 0.24 | 0.24 | 0.25 | 0.28 | 0.28 | 0.3 | 0.38 | 0.38 | 0.4 |
| | 1-9 | D9 | 0.23 | 0.22 | 0.23 | 0.25 | 0.24 | 0.25 | 0.28 | 0.28 | 0.3 | 0.4 | 0.4 | 0.4 |
| | 1-10 | D10 | 0.23 | 0.22 | 0.23 | 0.25 | 0.25 | 0.25 | 0.28 | 0.28 | 0.3 | 0.42 | 0.42 | 0.4 |
| | 1-11 | D11 | 0.23 | 0.22 | 0.23 | 0.25 | 0.25 | 0.25 | 0.29 | 0.29 | 0.29 | 4.43 | 0.43 | 0.4 |
| | 1-12 | D12 | 0.23 | 0.22 | 0.23 | 0.25 | 0.25 | 0.25 | 0.29 | 0.28 | 0.29 | 0.43 | 0.43 | 0.4 |
| | 1-13 | D13 | 0.24 | 0.22 | 0.23 | 0.26 | 0.25 | 0.25 | 0.3 | 0.28 | 0.29 | 0.44 | 0.43 | 0.4 |
| | 1-14 | D14 | 0.24 | 0.22 | 0.23 | 0.26 | 0.25 | 0.25 | 0.3 | 0.26 | 0.29 | 0.44 | 0.43 | 0.4 |
| | 1-15 | D15 | 0.24 | 0.22 | 0.23 | 0.26 | 0.25 | 0.25 | 0.3 | 0.28 | 0.28 | 0.45 | 0.43 | 0.4 |
| Comparative example | 1-5 | D5' | 0.25 | 0.22 | 0.2 | 0.27 | 0.27 | 0.24 | 0.32 | 0.32 | 0.34 | 0.5 | 0.46 | 0.52 |
| Example | 1-16 | D16 | 0.24 | 0.24 | 0.24 | 0.26 | 0.26 | 0.27 | 0.31 | 0.3 | 0.33 | 0.41 | 0.41 | 0.43 |

Table 6

| | | Dispersant No. | Trowel finish | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10℃ | 20℃ | 30℃ | 10℃ | 20℃ | 30℃ | 10℃ | 20℃ | 30℃ | 10℃ | 20℃ | 30℃ |
| Comparative example | 1-1 | D1' | ○ | ◎ | ◎ | ○ | ◎ | ◎ | ○ | ◎ | ◎ | × | × | ○ |
| Example | 1-1 | D1 | ○ | ◎ | ◎ | ○ | ◎ | ◎ | ○ | ◎ | ◎ | ○ | ○ | ○ |
| | 1-2 | D2 | ◎ | ◎ | ◎ | ◎ | ◎ | ◎ | ○ | ◎ | ◎ | ○ | ○ | ◎ |
| | 1-3 | D3 | ◎ | ◎ | ◎ | ◎ | ◎ | ◎ | ○ | ◎ | ◎ | ○ | ○ | ◎ |
| | 1-4 | D4 | ◎ | ◎ | ◎ | ◎ | ◎ | ◎ | ◎ | ◎ | ◎ | ○ | ○ | ◎ |
| | 1-5 | D5 | ◎ | ◎ | ◎ | ◎ | ◎ | ◎ | ◎ | ◎ | ◎ | ○ | ○ | ◎ |
| | 1-6 | D6 | ◎ | ◎ | ◎ | ◎ | ◎ | ◎ | ○ | ◎ | ◎ | ○ | ○ | ◎ |
| | 1-7 | D7 | ○ | ◎ | ◎ | ◎ | ◎ | ◎ | ○ | ◎ | ◎ | ○ | ○ | ◎ |
| Comparative example | 1-2 | D2' | ◎ | ◎ | ◎ | ◎ | ◎ | ◎ | ○ | ◎ | ◎ | × | ○ | ◎ |
| | 1-3 | D3' | ◎ | ◎ | ◎ | ◎ | ◎ | ◎ | ○ | ◎ | ◎ | ○ | ○ | ◎ |
| | 1-4 | D4' | × | ◎ | ◎ | × | ◎ | ◎ | × | ○ | ◎ | × | × | × |
| Example | 1-8 | D8 | ◎ | ◎ | ◎ | ◎ | ◎ | ◎ | ◎ | ◎ | ◎ | ○ | ○ | ◎ |
| | 1-9 | D9 | ◎ | ◎ | ◎ | ◎ | ◎ | ◎ | ◎ | ◎ | ◎ | ○ | ○ | ◎ |
| | 1-10 | D10 | ◎ | ◎ | ◎ | ○ | ◎ | ◎ | ○ | ◎ | ◎ | ○ | ○ | ◎ |
| | 1-11 | D11 | ◎ | ◎ | ◎ | ○ | ◎ | ◎ | ○ | ◎ | ◎ | ○ | ○ | ◎ |
| | 1-12 | D12 | ◎ | ◎ | ◎ | ○ | ◎ | ◎ | ○ | ◎ | ◎ | ○ | ○ | ◎ |
| | 1-13 | D13 | ◎ | ◎ | ◎ | ○ | ◎ | ◎ | ○ | ◎ | ◎ | ○ | ○ | ◎ |
| | 1-14 | D14 | ◎ | ◎ | ◎ | ○ | ◎ | ◎ | ○ | ◎ | ◎ | ○ | ○ | ◎ |
| | 1-15 | D15 | ○ | ◎ | ◎ | ○ | ◎ | ◎ | ○ | ◎ | ◎ | ○ | ○ | ◎ |
| Comparative example | 1-5 | D5' | ○ | ◎ | ◎ | × | ◎ | ◎ | × | ○ | ◎ | × | × | ◎ |
| Example | 1-16 | D16 | ◎ | ◎ | ◎ | ◎ | ◎ | ◎ | ◎ | ◎ | ◎ | ○ | ○ | ◎ |

Table 7

| | | Dispersant No. | Dispersion retention (%) [W/P=35(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Comparative example | 1-1 | D1’ | 105 | 102 | 86 | 92.5 | 78 | 58 | 83 | 68 | 45 |
| Example | 1-1 | D1 | 97 | 95 | 80 | 92 | 79 | 60 | 87 | 73 | 50 |
| | 1-2 | D2 | 96 | 94 | 77 | 92 | 86 | 62 | 88 | 78 | 55 |
| | 1-3 | D3 | 94.5 | 92 | 75 | 92,5 | 89 | 65 | 90 | 80 | 55 |
| | 1-4 | D4 | 94.5 | 92 | 74 | 92,5 | 89 | 65 | 90 | 81 | 55 |
| | 1-5 | D5 | 94.5 | 93 | 73 | 92.5 | 89 | 65 | 90 | 82 | 55 |
| | 1-6 | D6 | 95 | 93 | 74 | 92.5 | 87 | 63 | 89 | 80 | 52 |
| | 1-7 | D7 | 96 | 94 | 80 | 92 | 88 | 63 | 90 | 80 | 52 |
| Comparative example | 1-2 | D2’ | 97 | 95 | 77 | 92 | 79 | 60 | 84 | 62 | 49 |
| | 1-3 | D3’ | 96 | 94 | 77 | 92 | 68 | 52 | 80 | 60 | 45 |
| | 1-4 | D4’ | 106 | 102 | 91 | 90 | 74 | 52 | 81 | 63 | 45 |
| Example | 1-8 | D8 | 94.5 | 92 | 73 | 92.5 | 87 | 65 | 90 | 82 | 55 |
| | 1-9 | D9 | 94.5 | 92 | 73 | 92.5 | 85 | 65 | 90 | 80 | 55 |
| | 1-10 | D10 | 94.5 | 92 | 75 | 92.5 | 83 | 65 | 90 | 78 | 55 |
| | 1-11 | D11 | 95 | 93 | 76 | 92.5 | 80 | 62 | 88 | 76 | 52 |
| | 1-12 | D12 | 95 | 93 | 76 | 92 | 80 | 62 | 88 | 76 | 52 |
| | 1-13 | D13 | 96 | 93 | 78 | 92 | 76 | 59 | 87 | 73 | 51 |
| | 1-14 | D14 | 96 | 93 | 78 | 91 | 76 | 59 | 87 | 73 | 51 |
| | 1-15 | D15 | 97 | 94 | 80 | 91 | 73 | 56 | 85 | 70 | 48 |
| Comparative example | 1-5 | D5’ | 105 | 101 | 88 | 91 | 69 | 52 | 81 | 62 | 45 |
| Example | 1-16 | D16 | 95 | 93 | 76 | 92.5 | 84 | 60 | 89 | 79 | 53 |

Table 8

| | | Dispersant No. | Dispersion retention (%) [W/P=25(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Comparative example | 1-1 | D1' | 107 | 104 | 90 | 97 | 88 | 68 | 88 | 74 | 53 |
| Example | 1-1 | D1 | 98 | 96 | 82 | 95 | 89 | 67 | 89 | 76 | 58 |
| | 1-2 | D2 | 97 | 95 | 79 | 94 | 92 | 68 | 90 | 80.5 | 60 |
| | 1-3 | D3 | 97.5 | 94 | 78 | 94 | 90 | 69 | 91.5 | 81.5 | 59 |
| | 1-4 | D4 | 97 | 95 | 77 | 94 | 90 | 68 | 91.5 | 82 | 58 |
| | 1-5 | D5 | 96.5 | 93 | 76 | 94 | 90 | 68 | 91.5 | 83.5 | 58 |
| | 1-6 | D6 | 97 | 94 | 79 | 94 | 89 | 67 | 90.5 | 81 | 56 |
| | 1-7 | D7 | 97 | 94 | 79 | 94 | 90 | 67 | 90.5 | 81 | 56 |
| Comparative example | 1-2 | D2' | 98.5 | 96.5 | 79 | 94.5 | 84 | 68 | 87 | 67 | 53 |
| | 1-3 | D3' | 97.5 | 95 | 78.5 | 94.5 | 74 | 60 | 85 | 64 | 52 |
| | 1-4 | D4' | 108 | 104 | 93 | 94 | 82 | 62 | 84 | 68 | 58 |
| Example | 1-8 | D8 | 96.5 | 93 | 78 | 94 | 90 | 70 | 91.5 | 83 | 59 |
| | 1-9 | D9 | 96.5 | 93 | 79 | 94 | 88 | 70 | 91.5 | 81.5 | 59 |
| | 1-10 | D10 | 96.5 | 93 | 80 | 94 | 86 | 70 | 91.5 | 79.5 | 59 |
| | 1-11 | D11 | 97 | 94 | 82 | 94.5 | 84 | 69 | 90 | 77.5 | 56 |
| | 1-12 | D12 | 97 | 94 | 82 | 94.5 | 84 | 69 | 90 | 77.5 | 56 |
| | 1-13 | D13 | 98 | 95 | 84 | 94.5 | 82 | 67 | 89.5 | 74.5 | 55 |
| | 1-14 | D14 | 98 | 95 | 84 | 94.5 | 82 | 67 | 89.5 | 74.5 | 55 |
| | 1-15 | D15 | 99 | 96 | 85 | 95 | 80 | 65 | 88 | 71.5 | 53 |
| Comparative example | 1-5 | D5' | 108 | 104 | 91 | 97 | 79 | 65 | 85 | 65 | 50 |
| Example | 1-16 | D16 | 96 | 93 | 74 | 94 | 90 | 66 | 90 | 80 | 56 |

Table 9

| | | Dispersant No. | Dispersion retention (%)[W/P=20(A)] | | | | | | | | |
|---|---|---|---|---|---|---|---|---|---|---|---|
| | | | 10°C | | | 20°C | | | 30°C | | |
| | | | After 15 minute | After 30 minute. | after 45 minute | After 15 minute | After 30 minute | After 45 minute | After 15 minute | After 30 minute. | After 45 minutes |
| Comparative example | 1-1 | D1’ | 110 | 102 | 90 | 105 | 96 | 79 | 93 | 83 | 65 |
| Example | 1-1 | D1 | 100 | 98 | 86 | 99 | 95 | 77 | 91.5 | 81 | 68 |
| | 1-2 | D2 | 99 | 97 | 83 | 97 | 93 | 75 | 92.5 | 83 | 67 |
| | 1-3 | D3 | 100 | 94 | 79 | 96 | 91 | 74 | 93 | 84 | 64 |
| | 1-4 | D4 | 98.5 | 94 | 79 | 95 | 90.5 | 73 | 93 | 83.5 | 64 |
| | 1-5 | D5 | 98 | 93 | 78 | 95 | 90.5 | 73 | 93 | 84 | 64 |
| | 1-6 | D6 | 98 | 96 | 82 | 96 | 91 | 73 | 92 | 82 | 61 |
| | 1-7 | D7 | 99 | 97 | 84 | 96 | 92 | 74 | 92 | 82 | 61 |
| Comparative example | 1-2 | D2’ | 101 | 97.5 | 83 | 97 | 90 | 76 | 92 | 77 | 59 |
| | 1-3 | D3’ | 100 | 96 | 81 | 97 | 82 | 70 | 89 | 69 | 59 |
| | 1-4 | D4’ | 110 | 107 | 95 | 99 | 90 | 80 | 89 | 72 | 76 |
| Example | 1-8 | D8 | 98 | 93 | 78 | 95 | 91 | 75 | 93 | 84 | 65 |
| | 1-9 | D9 | 98 | 93 | 79 | 96 | 90 | 75 | 93 | 83 | 65 |
| | 1-10 | D10 | 99 | 93 | 80 | 96 | 89 | 75 | 93 | 81.5 | 65 |
| | 1-11 | D11 | 100 | 96 | 82 | 97 | 88 | 77 | 92.5 | 79 | 62 |
| | 1-12 | D12 | 100 | 96 | 82 | 97 | 88 | 77 | 92.5 | 79 | 62 |
| | 1-13 | D13 | 101 | 97 | 84 | 98 | 87 | 75 | 93 | 76.5 | 60 |
| | 1-14 | D14 | 101 | 97 | 84 | 98 | 87 | 75 | 93 | 76.5 | 60 |
| | 1-15 | D15 | 101 | 98 | 85 | 99 | 86 | 75 | 91.5 | 73.5 | 60 |
| Comparative example | 1-5 | D5’ | 111 | 108 | 94 | 105 | 91 | 80 | 91 | 69 | 57 |
| Example | 1-16 | D16 | 98 | 93 | 76 | 95 | 91 | 72 | 93 | 84 | 62 |

Table 10

| | | Dispersant No | Dispersion retention (%) [W/P=15(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Comparative example | 1-1 | D1’ | 115 | 110 | 100 | 111 | 107 | 93 | 100 | 96 | 82 |
| Example | 1-1 | D1 | 104 | 99 | 89 | 102 | 97 | 87 | 95 | 90 | 80 |
| | 1-2 | D2 | 102 | 99 | 87 | 100 | 96 | 85 | 95 | 87 | 77 |
| | 1-3 | D3 | 102 | 98.5 | 85 | 99 | 92 | 80 | 95 | 87 | 75 |
| | 1-4 | D4 | 101 | 98.5 | 84 | 98 | 92 | 79 | 95 | 86 | 73.5 |
| | 1-5 | D5 | 101 | 98 | 83 | 98 | 92 | 79 | 95 | 85 | 72 |
| | 1-6 | D6 | 101 | 98.5 | 83 | 99 | 94 | 80 | 94 | 83 | 69 |
| | 1-7 | D7 | 102 | 99 | 84 | 99 | 96 | 81 | 95 | 83 | 68 |
| Comparative example | 1-2 | D2’ | 105 | 99 | 91 | 102 | 97 | 87 | 95 | 80 | 66 |
| | 1-3 | D3’ | 104 | 100 | 90 | 102 | 96 | 82 | 94 | 80 | 66 |
| | 1-4 | D4’ | 114 | 110 | 104 | 105 | 105 | 97 | 100 | 97 | 91 |
| Example | 1-8 | D8 | 101 | 99 | 83 | 98 | 94 | 81 | 95 | 85 | 72 |
| | 1-9 | D9 | 101 | 99 | 83 | 99 | 94 | 82 | 95 | 85 | 72 |
| | 1-10 | D10 | 101 | 99 | 83 | 99 | 95 | 83 | 95 | 85 | 72 |
| | 1-11 | D11 | 102 | 99 | 85 | 100 | 96 | 85 | 96 | 82 | 71 |
| | 1-12 | D12 | 102 | 99 | 85 | 100 | 96 | 85 | 96 | 82 | 71 |
| | 1-13 | D13 | 103 | 100 | 87 | 101 | 96 | 86 | 97 | 80 | 69 |
| | 1-14 | D14 | 103 | 100 | 87 | 101 | 96 | 86 | 97 | 80 | 69 |
| | 1-15 | D15 | 104 | 100 | 90 | 102 | 97 | 87 | 97 | 77 | 68 |
| Comparative example | 1-5 | D5’ | 115 | 115 | 109 | 109.5 | 107 | 96 | 97 | 75 | 66 |
| Example | 1-16 | D16 | 100 | 98 | 81 | 99 | 92 | 77 | 95 | 84 | 70 |

<Example 2>

Using the dispersants in Table 2, the dispersants in Table 11 were prepared, and the same evaluation as in Example 1 was conducted. S1 was used as fine aggregate. The results are shown in Table 12 (a to c) and Table 13 (a to d).

Table 11

| | Dispersant No. | First copolymer | | Second copolymer | | Third copolymer | | First/second/third weight ratio | $\Delta n*x$ | | | $n_{AV}$ | $x_{AV}$ |
|---|---|---|---|---|---|---|---|---|---|---|---|---|---|
| | | No. | [n]*x | No. | [n]*x | No. | [n]*x | | First−Second | Second−third | First−third | | |
| Product of the invention | D17 | C12 | 315.0 | C6 | 157.5 | C3 | 70.5 | 65/25/10 | 157.5 | 87.0 | 244.5 | 14.6 | 14.0 |

Table 12

| (a) | | Dispersant No. | Dropping time (second) | | | |
|---|---|---|---|---|---|---|
| | | | W/P=35(A) | W/P=25(A) | W/P=20(A) | W/P=15(A) |
| Example | 2-1 | D17 | 12.3 | 19.1 | 27.1 | 42 |

| (b) | | Dispersant No. | Addition amount (weight-%) | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10°C | 20°C | 30°C | 10°C | 20°C | 30°C | 10°C | 20°C | 30°C | 10°C | 20°C | 30°C |
| Example | 2-1 | D17 | 0.22 | 0.22 | 0.23 | 0.24 | 0.24 | 0.25 | 0.28 | 0.28 | 0.3 | 0.38 | 0.38 | 0.4 |

| (c) | | Dispersant No. | Trowel finish | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10°C | 20°C | 30°C | 10°C | 20°C | 30°C | 10°C | 20°C | 30°C | 10°C | 20°C | 30°C |
| Example | 2-1 | D17 | ◎ | ◎ | ◎ | ◎ | ◎ | ◎ | ◎ | ◎ | ◎ | ○ | ○ | ◎ |

Table 13

| (a) | | Dispersant No | Dispersion retention (%) [W/P=35(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 2-1 | D17 | 94.5 | 93 | 73 | 93.5 | 90 | 65 | 90 | 84 | 60 |

| (b) | | Dispersant No | Dispersion retention (%) [W/P=25(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 2-1 | D17 | 96.5 | 93 | 76 | 94 | 92 | 68 | 91.5 | 85 | 58 |

| (c) | | Dispersant No | Dispersion retention (%) [W/P=20(A)] | | | | | | | | |
|---|---|---|---|---|---|---|---|---|---|---|---|
| | | | 10°C | | | 20°C | | | 30°C | | |
| | | | After 15 minutes After 30 minutes After 45 minutes | | | After 15 minutes After 30 minutes | | After 45 minutes | After 15 minutes | After 30 minutes After 45 minutes | |
| Example | 2-1 | D17 | 98 | 94 | 79 | 95 | 91.5 | 73 | 93 | 86 | 65 |

| (d) | | Dispersant No. | Dispersion retention (%) [W/P=15(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 2-1 | D17 | 102 | 99 | 84 | 98 | 94 | 80 | 95 | 87 | 73 |

<Example 3>

Using the following concrete materials, concrete was produced according to the formulation in Table 14. S1 was used as fine aggregate. This example is an example of a composition for use in a concrete centrifugal molded product.

<<Concrete materials>>

W: Tap water mixed with the cement dispersant.
HC: Rapid-hardening Portland cement (Sumitomo Osaka Cement Co., Ltd.), surface dry specific gravity = 3.15.
SFC: Silica fume cement [Ube Mitsubishi Cement Co., Ltd.], surface dry specific gravity = 3.08.
S1: Fine aggregate, mountain sand from Kimitsu in Chiba Pref., surface dry specific gravity = 2.63.
G: Coarse aggregate, gravel G2013 from Wakayama Pref., surface dry specific gravity = 2.62.

$$W/P:\ [W/(C + HC + SFC)] \times 100\ (\%,\ \text{weight ratio})$$

$$s/a:\ [S/(S + G)] \times 100\ (\%,\ \text{volume ratio})$$

Amount of air: 2%

Table 14

| Formulation | W/P (%, weight ratio) | s/a (%, Volume ratio) | Unit weight (kg/m$^3$) | | | | |
|---|---|---|---|---|---|---|---|
| | | | W | HC | SFC | S1 | G |
| Surface dry specific gravity | - | - | 1.00 | 3.15 | 3.08 | 2.63 | 2.62 |
| W/P=30(B) | 30.0 | 41.0 | 120 | 360 | 40 | 790 | 1133 |
| W/P=25(B) | 25.0 | 38.2 | 120 | 430 | 50 | 711 | 1145 |
| W/P=20(B) | 20.0 | 34.9 | 120 | 540 | 60 | 610 | 1145 |
| W/P=15(B) | 15.0 | 28.0 | 120 | 720 | 80 | 443 | 1145 |

<<Cement dispersant>>

The cement dispersants D1 to D15 and D1' to D5' obtained in Example 1 were used. Each of these dispersants was used to produce concrete in the following manner, and its dispersibility, dispersion retention and chargeability were evaluated. The results are shown in Tables 15 to 19.

<<Conditions for production of concrete>>

The amount of concrete kneaded was 40 liters, and concrete materials other than water mixed with the cement dispersant were introduced into a 60-L forced action twin-screw mixer and then kneaded for 60 seconds, and water mixed with the cement dispersant was introduced into it and kneaded for 360 seconds, and the mixture was discharged.

<<Dispersibility>>

The amount (solids content) of the first and second copolymers in total required to be added for the slump value of concrete just after kneading (JIS A 1101) to become 8 to 8.3 cm was expressed relative to the weight of hydraulic powder (P) of the dispersant and used as a measure of the dispersibility of concrete. A smaller amount of the copolymers added is indicative of higher dispersibility. The amount of initial air was regulated in the range of 2% or less by an entraining agent Mighty AE-03 manufactured by Kao Corporation) and a defoaming agent (Antifoam E-20 manufactured by Kao Corporation).

<<Dispersion retention>>

The percentage of the slump value after 15 and 30 minutes since kneading was initiated, was expressed relative to the slump flow value just after kneading, and used as a measure of dispersion retention. A higher value is indicative of higher dispersion retention. From the viewpoint of the following chargeability, there is a suitable range for fluidity.

<<Chargeability>>

Because it is preferable that ultrahigh strength concrete for centrifugal molding reduces the slump value to 10 cm or less, W/P is regulated by reducing the unit amount of water. Accordingly, when the dispersibility is low, kneading is insufficient and the slump tends to be increased with time. When the slump exceeds 10 cm, the concrete becomes a fluid of very high viscosity, and coarse aggregate cannot pass through spaces among reinforcing rods in a concrete form, resulting in poor charging. When the slump is too small, the concrete is hardly fluidized thus deteriorating chargeability, and therefore the slump is desirably not less than 3 cm. Then, the chargeability was evaluated in the following manner.

(1) A plastic funnel having an upper introduction opening of 30 cm and a lower discharge opening of 7 cm (distance between the upper introduction opening and the lower discharge opening was 23 cm) was arranged on an opening of 10 cm in diameter in an upper side of a centrifugal molding concrete form of diameter 20 cm × length 30 cm (see Fig. 2).
(2) 15 kg concrete in 15 minutes just after kneading was introduced successively in divided portions, each 1.5 kg, by a hand scoop through the upper opening of the funnel, and while the introduced concrete was slightly stabbed with a stabbing bar stipulated under JIS A 1101, the whole of the concrete was introduced.
(3) The time having elapsed until the whole of the concrete was introduced into the concrete form was measured and evaluated according to the following criteria.

(Evaluation criteria)

⊙: The whole of the introduced concrete was introduced into the concrete form within 1 minute.
○: The whole of the introduced concrete was introduced into the concrete form in a period of from 1 to 2 minutes.
×: The whole of the introduced concrete was not introduced into the concrete form within 2 minutes.

Table 15

| | | Dispersant No. | Addition amount (weight-%) | | | | | | | | | | | |
|---|---|---|---|---|---|---|---|---|---|---|---|---|---|---|
| | | | W/P=30(B) | | | W/P=25(B) | | | W/P=20(B) | | | W/P=15(B) | | |
| | | | 10℃ | 20℃ | 30℃ | 10℃ | 20℃ | 30℃ | 10℃ | 20℃ | 30℃ | 10℃ | 20℃ | 30℃ |
| Comparative example | 3-1 | D1' | 0.31 | 0.31 | 0.38 | 0.36 | 0.36 | 0.41 | 0.45 | 0.45 | 0.49 | 0.60 | 0.60 | 0.65 |
| Example | 3-1 | D1 | 0.30 | 0.30 | 0.34 | 0.35 | 0.35 | 0.38 | 0.41 | 0.41 | 0.46 | 0.55 | 0.55 | 0.58 |
| | 3-2 | D2 | 0.29 | 0.29 | 0.31 | 0.34 | 0.34 | 0.35 | 0.40 | 0.39 | 0.43 | 0.53 | 0.53 | 0.55 |
| | 3-3 | D3 | 0.29 | 0.29 | 0.30 | 0.31 | 0.31 | 0.33 | 0.38 | 0.38 | 0.40 | 0.50 | 0.50 | 0.54 |
| | 3-4 | D4 | 0.29 | 0.29 | 0.30 | 0.30 | 0.30 | 0.33 | 0.36 | 0.36 | 0.39 | 0.49 | 0.49 | 0.53 |
| | 3-5 | D5 | 0.28 | 0.28 | 0.29 | 0.30 | 0.30 | 0.31 | 0.35 | 0.35 | 0.38 | 0.48 | 0.48 | 0.50 |
| | 3-6 | D6 | 0.29 | 0.29 | 0.30 | 0.31 | 0.33 | 0.33 | 0.36 | 0.36 | 0.39 | 0.49 | 0.49 | 0.53 |
| | 3-7 | D7 | 0.29 | 0.29 | 0.30 | 0.31 | 0.31 | 0.33 | 0.36 | 0.36 | 0.39 | 0.50 | 0.50 | 0.55 |
| Comparative example | 3-2 | D2' | 0.29 | 0.29 | 0.31 | 0.34 | 0.34 | 0.35 | 0.40 | 0.39 | 0.43 | 0.55 | 0.55 | 0.58 |
| | 3-3 | D3' | 0.28 | 0.25 | 0.24 | 0.34 | 0.29 | 0.28 | 0.38 | 0.35 | 0.34 | 0.55 | 0.55 | 0.50 |
| | 3-4 | D4' | 0.35 | 0.35 | 0.43 | 0.40 | 0.40 | 0.45 | 0.55 | 0.55 | 0.63 | 0.73 | 0.73 | 0.75 |
| Example | 3-8 | D8 | 0.28 | 0.28 | 0.29 | 0.30 | 0.30 | 0.31 | 0.35 | 0.35 | 0.38 | 0.48 | 0.48 | 0.50 |
| | 3-9 | D9 | 0.29 | 0.28 | 0.29 | 0.31 | 0.30 | 0.31 | 0.35 | 0.35 | 0.38 | 0.50 | 0.50 | 0.50 |
| | 3-10 | D10 | 0.29 | 0.28 | 0.29 | 0.31 | 0.31 | 0.31 | 0.35 | 0.35 | 0.38 | 0.53 | 0.53 | 0.50 |
| | 3-11 | D11 | 0.29 | 0.28 | 0.29 | 0.31 | 0.31 | 0.31 | 0.36 | 0.36 | 0.36 | 5.54 | 0.54 | 0.50 |
| | 3-12 | D12 | 0.29 | 0.28 | 0.29 | 0.31 | 0.31 | 0.31 | 0.36 | 0.35 | 0.36 | 0.54 | 0.54 | 0.50 |
| | 3-13 | D13 | 0.30 | 0.28 | 0.29 | 0.33 | 0.31 | 0.31 | 0.38 | 0.35 | 0.36 | 0.55 | 0.54 | 0.50 |
| | 3-14 | D14 | 0.30 | 0.28 | 0.29 | 0.33 | 0.31 | 0.31 | 0.38 | 0.33 | 0.36 | 0.55 | 0.54 | 0.50 |
| | 3-15 | D15 | 0.30 | 0.28 | 0.29 | 0.33 | 0.31 | 0.31 | 0.38 | 0.35 | 0.35 | 0.56 | 0.54 | 0.50 |
| Comparative example | 3-5 | D5' | 0.31 | 0.28 | 0.25 | 0.34 | 0.34 | 0.30 | 0.40 | 0.40 | 0.43 | 0.63 | 0.58 | 0.65 |
| Example | 3-16 | D16 | 0.3 | 0.3 | 0.3 | 0.33 | 0.33 | 0.34 | 0.39 | 0.38 | 0.41 | 0.51 | 0.51 | 0.54 |

Table 16

| | | Dispersant No. | Chargeability | | | | | | | | | | | |
|---|---|---|---|---|---|---|---|---|---|---|---|---|---|---|
| | | | W/P=30(B) | | | | | | W/P=25(B) | | | | | |
| | | | 10℃ | | 20℃ | | 30℃ | | 10℃ | | 20℃ | | 30℃ | |
| | | | After 15 minutes | After 30 minutes | After 15 minutes | After 30 minutes | After 15 minutes | After 30 minutes | After 15 minutes | After 30 minutes | After 15 minutes | After 30 minutes | After 15 minutes | After 30 minutes |
| Comparative example | 3-1 | D1' | ○ | ◎ | ○ | ◎ | ◎ | × | × | ○ | ○ | ◎ | ○ | ◎ |
| Example | 3-1 | D1 | ○ | ◎ | ◎ | ◎ | ◎ | ◎ | ○ | ◎ | ○ | ◎ | ◎ | ◎ |
| | 3-2 | D2 | ○ | ◎ | ◎ | ◎ | ◎ | ◎ | ○ | ◎ | ◎ | ◎ | ◎ | ◎ |
| | 3-3 | D3 | ◎ | ◎ | ◎ | ◎ | ◎ | ◎ | ○ | ◎ | ◎ | ◎ | ◎ | ◎ |
| | 3-4 | D4 | ◎ | ◎ | ◎ | ◎ | ◎ | ◎ | ○ | ◎ | ◎ | ◎ | ◎ | ◎ |
| | 3-5 | D5 | ◎ | ◎ | ◎ | ◎ | ◎ | ◎ | ◎ | ◎ | ◎ | ◎ | ◎ | ◎ |
| | 3-6 | D6 | ◎ | ◎ | ◎ | ◎ | ◎ | ◎ | ○ | ◎ | ◎ | ◎ | ◎ | ◎ |
| | 3-7 | D7 | ◎ | ◎ | ◎ | ◎ | ◎ | ◎ | ○ | ◎ | ◎ | ◎ | ◎ | ◎ |
| Comparative example | 3-2 | D2' | ◎ | ◎ | ◎ | × | × | × | ○ | ◎ | ◎ | ◎ | ◎ | × |
| | 3-3 | D3' | ◎ | ◎ | ◎ | × | × | × | ○ | ◎ | ◎ | ◎ | ◎ | × |
| | 3-4 | D4' | ○ | ◎ | ○ | ◎ | × | × | ○ | ○ | ○ | ◎ | ◎ | ◎ |
| Example | 3-8 | D8 | ◎ | ◎ | ◎ | ◎ | ◎ | ◎ | ○ | ◎ | ◎ | ◎ | ◎ | ◎ |
| | 3-9 | D9 | ◎ | ◎ | ◎ | ◎ | ◎ | ◎ | ○ | ◎ | ◎ | ◎ | ◎ | ◎ |
| | 3-10 | D10 | ◎ | ◎ | ◎ | ◎ | ◎ | ◎ | ○ | ◎ | ◎ | ◎ | ◎ | ◎ |
| | 3-11 | D11 | ○ | ◎ | ◎ | ◎ | ◎ | ◎ | ○ | ◎ | ◎ | ◎ | ◎ | ◎ |
| | 3-12 | D12 | ○ | ◎ | ◎ | ◎ | ◎ | ◎ | ○ | ◎ | ◎ | ◎ | ◎ | ◎ |
| | 3-13 | D13 | ○ | ◎ | ◎ | ◎ | ◎ | ◎ | ○ | ◎ | ◎ | ◎ | ◎ | ◎ |
| | 3-14 | D14 | ○ | ◎ | ◎ | ◎ | ◎ | ◎ | ○ | ◎ | ◎ | ◎ | ◎ | ◎ |
| | 3-15 | D15 | ○ | ◎ | ◎ | ◎ | ◎ | ◎ | ○ | ○ | ◎ | ◎ | ◎ | ◎ |
| Comparative example | 3-5 | D5' | ○ | ◎ | ◎ | × | × | × | × | ○ | ○ | ◎ | ◎ | ◎ |
| Example | 3-16 | D16 | ◎ | ◎ | ◎ | ◎ | ◎ | ◎ | ◎ | ◎ | ◎ | ◎ | ◎ | ◎ |

Table 17

| | | Dispersant No. | Chargeability W/P=20(B) 10°C After 15 minutes | W/P=20(B) 10°C After 30 minutes | W/P=20(B) 20°C After 15 minutes | W/P=20(B) 20°C After 30 minutes | W/P=20(B) 30°C After 15 minutes | W/P=20(B) 30°C After 30 minutes | W/P=15(B) 10°C After 15 minutes | W/P=15(B) 10°C After 30 minutes | W/P=15(B) 20°C After 15 minutes | W/P=15(B) 20°C After 30 minutes | W/P=15(B) 30°C After 15 minutes | W/P=15(B) 30°C After 30 minutes |
|---|---|---|---|---|---|---|---|---|---|---|---|---|---|---|
| Comparative example | 3-1 | D1' | × | ○ | ○ | ○ | ○ | ◎ | × | × | × | ○ | ○ | ◎ |
| Example | 3-1 | D1 | ○ | ○ | ◎ | ◎ | ◎ | ◎ | ○ | ○ | ○ | ◎ | ○ | ◎ |
| | 3-2 | D2 | ○ | ◎ | ◎ | ◎ | ◎ | ◎ | ○ | ○ | ○ | ◎ | ○ | ◎ |
| | 3-3 | D3 | ○ | ◎ | ◎ | ◎ | ◎ | ◎ | ○ | ○ | ○ | ○ | ◎ | ◎ |
| | 3-4 | D4 | ○ | ◎ | ◎ | ◎ | ◎ | ◎ | ○ | ○ | ○ | ◎ | ◎ | ◎ |
| | 3-5 | D5 | ○ | ◎ | ◎ | ◎ | ◎ | ◎ | ○ | ○ | ○ | ◎ | ◎ | ◎ |
| | 3-6 | D6 | ○ | ◎ | ◎ | ◎ | ◎ | ◎ | ○ | ○ | ○ | ◎ | ◎ | ◎ |
| | 3-7 | D7 | ○ | ◎ | ◎ | ◎ | ◎ | ◎ | ○ | ○ | ○ | ○ | ◎ | ◎ |
| Comparative example | 3-2 | D2' | ○ | ○ | ○ | ◎ | ◎ | ◎ | × | ○ | ○ | ○ | ◎ | ◎ |
| | 3-3 | D3' | ○ | ◎ | ◎ | ◎ | ◎ | ◎ | × | ○ | ○ | ○ | ○ | ◎ |
| | 3-4 | D4' | × | ○ | ○ | ○ | ◎ | ◎ | × | × | × | ○ | ○ | ◎ |
| Example | 3-8 | D8 | ○ | ◎ | ◎ | ◎ | ◎ | ◎ | ○ | ○ | ○ | ◎ | ◎ | ◎ |
| | 3-9 | D9 | ○ | ◎ | ◎ | ◎ | ◎ | ◎ | ○ | ○ | ○ | ○ | ○ | ◎ |
| | 3-10 | D10 | ○ | ○ | ◎ | ◎ | ◎ | ◎ | ○ | ○ | ○ | ○ | ○ | ◎ |
| | 3-11 | D11 | ○ | ○ | ◎ | ◎ | ◎ | ◎ | ○ | ○ | ○ | ○ | ○ | ◎ |
| | 3-12 | D12 | ○ | ○ | ◎ | ◎ | ◎ | ◎ | ○ | ○ | ○ | ○ | ○ | ◎ |
| | 3-13 | D13 | ○ | ○ | ○ | ◎ | ◎ | ◎ | ○ | ○ | ○ | ○ | ○ | ◎ |
| | 3-14 | D14 | ○ | ○ | ○ | ◎ | ◎ | ◎ | ○ | ○ | ○ | ○ | ○ | ◎ |
| | 3-15 | D15 | ○ | ○ | ○ | ◎ | ◎ | ◎ | ○ | ○ | ○ | ○ | ○ | ◎ |
| Comparative example | 3-5 | D5' | × | ○ | × | ○ | ◎ | ◎ | × | × | × | ○ | ○ | ◎ |
| Example | 3-16 | D16 | ○ | ◎ | ◎ | ◎ | ◎ | ◎ | ○ | ○ | ○ | ◎ | ◎ | ◎ |

Table 18

| | | Dispersant No | Dispersion retention (%) [W/P=30(B)] | | | | | | Dispersion retention (%) [W/P=25(B)] | | | | | |
|---|---|---|---|---|---|---|---|---|---|---|---|---|---|---|
| | | | 10°C | | 20°C | | 30°C | | 10°C | | 20°C | | 30°C | |
| | | | After 15 minutes | After 30 minutes | After 15 minutes | After 30 minutes | After 15 minutes | After 30 minutes | After 15 minutes | After 30 minutes | After 15 minutes | After 30 minutes | After 15 minutes | After 30 minutes |
| Comparative example | 3-1 | D1’ | 110 | 75 | 85 | 55 | 55 | 32.5 | 135 | 85 | 105 | 65 | 80 | 40 |
| Example | 3-1 | D1 | 90 | 70 | 75 | 50 | 55 | 37.5 | 95 | 75 | 80 | 55 | 65 | 42.5 |
| | 3-2 | D2 | 82.5 | 65 | 70 | 50 | 57.5 | 37.5 | 87.5 | 70 | 75 | 55 | 62.5 | 42.5 |
| | 3-3 | D3 | 75 | 57.5 | 65 | 45 | 52.5 | 40 | 82.5 | 65 | 70 | 52.5 | 60 | 45 |
| | 3-4 | D4 | 72.5 | 55 | 62.5 | 45 | 52.5 | 40 | 80 | 62.5 | 67.5 | 52.5 | 57.5 | 45 |
| | 3-5 | D5 | 70 | 55 | 60 | 45 | 52.5 | 40 | 77.5 | 62.5 | 65 | 52.5 | 57.5 | 45 |
| | 3-6 | D6 | 72.5 | 57.5 | 60 | 42.5 | 40 | 40 | 80 | 62.5 | 65 | 50 | 55 | 45 |
| | 3-7 | D7 | 75 | 57.5 | 57.5 | 42.5 | 47.5 | 37.5 | 85 | 65 | 67.5 | 50 | 55 | 42.5 |
| Comparative example | 3-2 | D2’ | 77.5 | 60 | 45 | 32.5 | 32.5 | 20 | 82.5 | 70 | 62.5 | 45 | 42.5 | 30 |
| | 3-3 | D3’ | 65 | 45 | 35 | 20 | 25 | 12.5 | 80 | 55 | 50 | 30 | 35 | 20 |
| | 3-4 | D4’ | 90 | 65 | 80 | 40 | 32.5 | 20 | 110 | 85 | 95 | 60 | 50 | 35 |
| Example | 3-8 | D8 | 70 | 55 | 60 | 45 | 52.5 | 40 | 80 | 62.5 | 65 | 52.5 | 57.5 | 45 |
| | 3-9 | D9 | 75 | 55 | 60 | 45 | 50 | 40 | 80 | 62.5 | 65 | 52.5 | 57.5 | 45 |
| | 3-10 | D10 | 75 | 55 | 60 | 45 | 50 | 40 | 85 | 65 | 65 | 52.5 | 57.5 | 45 |
| | 3-11 | D11 | 80 | 60 | 55 | 42.5 | 47.5 | 37.5 | 90 | 70 | 65 | 52.5 | 57.5 | 42.5 |
| | 3-12 | D12 | 80 | 60 | 55 | 42.5 | 47.5 | 37.5 | 90 | 70 | 65 | 52.5 | 52.5 | 42.5 |
| | 3-13 | D13 | 85 | 65 | 50 | 45 | 45 | 37.5 | 95 | 72.5 | 62.5 | 55 | 55 | 42.5 |
| | 3-14 | D14 | 85 | 65 | 50 | 45 | 45 | 37.5 | 95 | 72.5 | 62.5 | 55 | 55 | 42.5 |
| | 3-15 | D15 | 90 | 70 | 47.5 | 40 | 45 | 37.5 | 97.5 | 80 | 62.5 | 50 | 55 | 42.5 |
| Comparative example | 3-5 | D5’ | 90 | 70 | 45 | 30 | 25 | 12.5 | 135 | 90 | 115 | 60 | 45 | 27.5 |
| Example | 3-16 | D16 | 70 | 52.5 | 60 | 42.5 | 52.5 | 37.5 | 77.5 | 60 | 65 | 50 | 57.5 | 42.5 |

Table 19

| | | Dispersant No. | Dispersion retention (%) [W/P=20(B)] | | | | | | Dispersion retention (%) [W/P=15(B)] | | | | | |
|---|---|---|---|---|---|---|---|---|---|---|---|---|---|---|
| | | | 10°C | | 20°C | | 30°C | | 10°C | | 20°C | | 30°C | |
| | | | After 15 minutes | After 30 minutes | After 15 minutes | After 30 minutes | After 15 minutes | After 30 minutes | After 15 minutes | After 30 minutes | After 15 minutes | After 30 minutes | After 15 minutes | After 30 minutes |
| Comparative example | 3-1 | D1' | 150 | 105 | 120 | 80 | 90 | 52.5 | 160 | 130 | 135 | 100 | 105 | 70 |
| Example | 3-1 | D1 | 105 | 82.5 | 65 | 62.5 | 77.5 | 50 | 120 | 95 | 105 | 75 | 85 | 65 |
| | 3-2 | D2 | 100 | 77.5 | 62.5 | 62.5 | 67.5 | 52.5 | 115 | 90 | 95 | 77.5 | 80 | 65 |
| | 3-3 | D3 | 92.5 | 75 | 75 | 65 | 65 | 52.5 | 107.5 | 90 | 85 | 80 | 75 | 65 |
| | 3-4 | D4 | 90 | 72.5 | 75 | 62.5 | 62.5 | 50 | 102.5 | 87.5 | 80 | 77.5 | 70 | 65 |
| | 3-5 | D5 | 87.5 | 72.5 | 75 | 62.5 | 62.5 | 50 | 100 | 85 | 80 | 75 | 70 | 65 |
| | 3-6 | D6 | 90 | 72.5 | 55 | 60 | 60 | 50 | 95 | 85 | 85 | 75 | 70 | 62.5 |
| | 3-7 | D7 | 95 | 75 | 55 | 60 | 62.5 | 50 | 97.5 | 90 | 87.5 | 80 | 75 | 62.5 |
| Comparative example | 3-2 | D2' | 100 | 85 | 82.5 | 62.5 | 57.5 | 42.5 | 127.5 | 105 | 97.5 | 85 | 70 | 57.5 |
| | 3-3 | D3' | 100 | 75 | 75 | 55 | 55 | 40 | 130 | 100 | 110 | 80 | 85 | 60 |
| | 3-4 | D4' | 135 | 110 | 115 | 95 | 70 | 57.5 | 180 | 145 | 145 | 115 | 100 | 75 |
| Example | 3-8 | D8 | 90 | 75 | 75 | 62.5 | 62.5 | 50 | 105 | 90 | 95 | 75 | 75 | 65 |
| | 3-9 | D9 | 92.5 | 75 | 75 | 62.5 | 62.5 | 50 | 107.5 | 95 | 100 | 80 | 80 | 65 |
| | 3-10 | D10 | 95 | 80 | 75 | 62.5 | 62.5 | 50 | 110 | 100 | | 82.5 | 82.5 | 65 |
| | 3-11 | D11 | 100 | 85 | 77.5 | 67.5 | 65 | 50 | 112.5 | 102.5 | 102.5 | 85 | 85 | 62.5 |
| | 3-12 | D12 | 100 | 85 | 77.5 | 67.5 | 65 | 50 | 112.5 | 102.5 | 105 | 85 | 85 | 62.5 |
| | 3-13 | D13 | 105 | 87.5 | 80 | 67.5 | 67.5 | 47.5 | 115 | 105 | 107.5 | 90 | 87.5 | 60 |
| | 3-14 | D14 | 105 | 87.5 | 80 | 67.5 | 67.5 | 47.5 | 115 | 105 | 107.5 | 90 | 87.5 | 60 |
| | 3-15 | D15 | 110 | 95 | 82.5 | 70 | 70 | 47.5 | 120 | 110 | 110 | 95 | 90 | 60 |
| Comparative example | 3-5 | D5' | 170 | 115 | 130 | 95 | 70 | 45 | 200 | 145 | 145 | 115 | 95 | 60 |
| Example | 3-16 | D16 | 87.5 | 70 | 75 | 60 | 60 | 57.5 | 100 | 82.5 | 80 | 72.5 | 67.5 | 62.5 |

<Example 4>

The same evaluation as in Example 3 was conducted by using the dispersants in Table 11 in Example 2. S1 was used as fine aggregate. The results are shown in Table 20, Table 21 (a to d), and Table 22 (a to d).

Table 20

| | | Dispersant No. | Addition amount (weight-%) | | | | | | | | | | | |
|---|---|---|---|---|---|---|---|---|---|---|---|---|---|---|
| | | | W/P=30(B) | | | W/P=25(B) | | | W/P=20(B) | | | W/P=15(B) | | |
| | | | 10°C | 20°C | 30°C | 10°C | 20°C | 30°C | 10°C | 20°C | 30°C | 10°C | 20°C | 30°C |
| Example | 4-1 | D17 | 0.29 | 0.29 | 0.30 | 0.30 | 0.30 | 0.33 | 0.36 | 0.36 | 0.39 | 0.49 | 0.49 | 0.53 |

Table 21

| (a) | | Dispersant No. | Chargeability | | | | | |
|---|---|---|---|---|---|---|---|---|
| | | | W/P=30(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 4-1 | D17 | ◎ | ◎ | ◎ | ◎ | ◎ | ◎ |

| (b) | | Dispersant No. | Chargeability | | | | | |
|---|---|---|---|---|---|---|---|---|
| | | | W/P=25(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 4-1 | D17 | ◎ | ◎ | ◎ | ◎ | ◎ | ◎ |

| (c) | | Dispersant No. | Chargeability | | | | | |
|---|---|---|---|---|---|---|---|---|
| | | | W/P=20(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 4-1 | D17 | ○ | ◎ | ◎ | ◎ | ◎ | ◎ |

| (d) | | Dispersant No. | Chargeability | | | | | |
|---|---|---|---|---|---|---|---|---|
| | | | W/P=15(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 4-1 | D17 | ○ | ○ | ○ | ◎ | ◎ | ◎ |

Table 22

| (a) | | Dispersant No. | Dispersion retention(%) [W/P=30(B)] | | | | | |
|---|---|---|---|---|---|---|---|---|
| | | | 10°C | | 20°C | | 30°C | |
| | | | After 15 minutes | After 30 minutes | After 15 minutes | After 30 minutes | After 15 minutes | After 30 minutes |
| Example | 4-1 | D17 | 70 | 55 | 65 | 50 | 57.5 | 45 |

| (b) | | Dispersant No. | Dispersion retention (%) [W/P=25(B)] | | | | | |
|---|---|---|---|---|---|---|---|---|
| | | | 10°C | | 20°C | | 30°C | |
| | | | After 15 minutes | After 30 minutes | After 15 minutes | After 30 minutes | After 15 minutes | After 30 minutes |
| Example | 4-1 | D17 | 77.5 | 62.5 | 70 | 55 | 65 | 50 |

| (c) | | Dispersant No. | Dispersion retention (%) [W/P=20(B)] | | | | | |
|---|---|---|---|---|---|---|---|---|
| | | | 10°C | | 20°C | | 30°C | |
| | | | After 15 minutes | After 30 minutes | After 15 minutes | After 30 minutes | After 15 minutes | After 30 minutes |
| Example | 4-1 | D17 | 87.5 | 72.5 | 75 | 62.5 | 62.5 | 52.5 |

| (d) | | Dispersant No. | Dispersion retention (%) [W/P=15(B)] | | | | | |
|---|---|---|---|---|---|---|---|---|
| | | | 10°C | | 20°C | | 30°C | |
| | | | After 15 minutes | After 30 minutes | After 15 minutes | After 30 minutes | After 15 minutes | After 30 minutes |
| Example | 4-1 | D17 | 100 | 85 | 80 | 75 | 75 | 67.5 |

<Example 5>

The effects of the dispersants D3 and D5 in Table 3 were evaluated in the same manner as in Example 1 except that S2 was used in place of fine aggregate S1 in the formulation in Example 1. The results are shown in Table 23 (a to b) and Table 24 (a to d).

Table 23

| (a) | | Dispersant No. | Dropping time (second) | | | |
|---|---|---|---|---|---|---|
| | | | W/P=35(A) | W/P=25(A) | W/P=20(A) | W/P=15(A) |
| Example | 5-1 | D3 | 10.0 | 16.2 | 25.1 | 38.9 |
| | 5-2 | D5 | 11.2 | 18.2 | 25.9 | 40.0 |

| (a) | | Dispersant No. | Addition amount (weight-%) | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10°C | 20°C | 30°C | 10°C | 20°C | 30°C | 10°C | 20°C | 30°C | 10°C | 20°C | 30°C |
| Example | 5-1 | D3 | 0.19 | 0.19 | 0.20 | 0.21 | 0.21 | 0.22 | 0.26 | 0.26 | 0.28 | 0.34 | 0.34 | 0.37 |
| | 5-2 | D5 | 0.18 | 0.18 | 0.19 | 0.20 | 0.20 | 0.21 | 0.24 | 0.24 | 0.26 | 0.32 | 0.32 | 0.34 |

| (b) | | Dispersant No. | Trowel finish | | | | | | | | | | | |
|---|---|---|---|---|---|---|---|---|---|---|---|---|---|---|
| | | | W/P=35(A) | | | W/P=25(A) | | | W/P=20(A) | | | W/P=15(A) | | |
| | | | 10°C | 20°C | 30°C | 10°C | 20°C | 30°C | 10°C | 20°C | 30°C | 10°C | 20°C | 30°C |
| Example | 5-1 | D3 | ◎ | ◎ | ◎ | ◎ | ◎ | ◎ | ◎ | ◎ | ◎ | ○ | ◎ | ◎ |
| | 5-2 | D5 | ◎ | ◎ | ◎ | ◎ | ◎ | ◎ | ◎ | ◎ | ◎ | ○ | ◎ | ◎ |

Table 24

| (a) | | Dispersant No. | Dispersion retention(%) [W/P=35(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 5-1 | D3 | 93 | 90.5 | 73 | 91 | 86 | 62 | 88 | 78 | 52 |
| | 5-1 | D5 | 93 | 91.5 | 71 | 91 | 86 | 62 | 88 | 79 | 52 |

| (b) | | Dispersant No. | Dispersion retention (%) [W/P=25(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 5-1 | D3 | D3 | 93 | 75 | 92 | 88 | 67 | 90 | 80 | 57 |
| | 5-2 | D5 | 95 | 91 | 73 | 92 | 88 | 66 | 90 | 81 | 56 |

| (c) | | Dispersant No | Dispersion retention (%) [W/P=20(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 5-1 | D3 | 98 | 92 | 77 | 94 | 89 | 72 | 90 | 82 | 62 |
| | 5-2 | D5 | 96 | 91 | 76 | 93 | 88.5 | 71 | 91 | 82 | 92 |

(continued)

| (d) | | Dispersant No. | Dispersion retention(%) [W/P=15(A)] | | | | | | | | |
|---|---|---|---|---|---|---|---|---|---|---|---|
| | | | 10°C | | | 20°C | | | 30°C | | |
| | | | After 15 minutes | After 30 minutes | After 45 minutes | After 15 minutes | After 30 minutes | After 45 minutes | After 15 minutes | After 30 minutes | After 45 minutes |
| Example | 5-1 | D3 | 100 | 97 | 83 | 97 | 90 | 78 | 93 | 85 | 72 |
| | 5-2 | D5 | 99 | 96 | 81 | 96 | 90 | 77 | 93 | 83 | 70 |

<Example 6>

The effects of the dispersants D3 and D5 in Table 3 were evaluated in the same manner as in Example 3 except that S2 was used in place of fine aggregate S1 in the formulation in Example 3. The results are shown in Table 25, Table 26 (a to d) and Table 27 (a to d).

Table 25

| | | Dispersant No. | Addition amount (weight-%) | | | | | | | | | | | |
|---|---|---|---|---|---|---|---|---|---|---|---|---|---|---|
| | | | W/P=30(B) | | | W/P=25(B) | | | W/P=20(B) | | | W/P=15(B) | | |
| | | | 10°C | 20°C | 30°C | 10°C | 20°C | 30°C | 10°C | 20°C | 30°C | 10°C | 20°C | 30°C |
| Example | 6-1 | D3 | 0.24 | 0.24 | 0.25 | 0.26 | 0.26 | 0.28 | 0.33 | 0.325 | 0.35 | 0.43 | 0.43 | 0.46 |
| | 6-2 | D5 | 0.23 | 0.23 | 0.24 | 0.25 | 0.25 | 0.26 | 0.30 | 0.30 | 0.33 | 0.40 | 0.40 | 0.43 |

Table 26

| (a) | | Dispersant No. | Chargeability | | | | | |
|---|---|---|---|---|---|---|---|---|
| | | | W/P=30(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | ◎ | ◎ | ◎ | ◎ | ◎ | ◎ |
| | 6-2 | D5 | ◎ | ◎ | ◎ | ◎ | ◎ | ◎ |

| (b) | | Dispersant No. | Chargeability | | | | | |
|---|---|---|---|---|---|---|---|---|
| | | | W/P=25(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | ◎ | ◎ | ◎ | ◎ | ◎ | ◎ |
| | 6-2 | D5 | ◎ | ◎ | ◎ | ◎ | ◎ | ◎ |

| (c) | | Dispersant No. | Chargeability | | | | | |
|---|---|---|---|---|---|---|---|---|
| | | | W/P=20(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | ◎ | ◎ | ◎ | ◎ | ◎ | ◎ |
| | 6-2 | D5 | ◎ | ◎ | ◎ | ◎ | ◎ | ◎ |

| (d) | | Dispersant No. | Chargeability | | | | | |
|---|---|---|---|---|---|---|---|---|
| | | | W/P=15(B) | | | | | |
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | ○ | ◎ | ○ | ◎ | ◎ | ◎ |
| | 6-2 | D5 | ○ | ◎ | ◎ | ◎ | ◎ | ◎ |

Table 27

| (a) | | Dispersant No. | Dispersion retention (%) [W/P=30(B)] | | | | | |
|---|---|---|---|---|---|---|---|---|
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | 72.5 | 55 | 62.5 | 42.5 | 50 | 37.5 |
| | 6-2 | D5 | 67.5 | 52.5 | 57.5 | 42.5 | 50 | 37.5 |

| (b) | | Dispersant No. | Dispersion retention (%) [W/P=25(B)] | | | | | |
|---|---|---|---|---|---|---|---|---|
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | 80 | 62.5 | 67.5 | 50 | 57.5 | 42.5 |
| | 6-2 | D5 | 85 | 60 | 62.5 | 50 | 55 | 42.5 |

| (c) | | Dispersant No. | Dispersion retention (%) [W/P=20(B)] | | | | | |
|---|---|---|---|---|---|---|---|---|
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | 87.5 | 72.5 | 72.5 | 62.5 | 62.5 | 50 |
| | 6-2 | D5 | 85 | 70 | 72.5 | 60 | 60 | 47.5 |

| (d) | | Dispersant No. | Dispersion retention (%) [W/P=15(B)] | | | | | |
|---|---|---|---|---|---|---|---|---|
| | | | 10℃ | | 20℃ | | 30℃ | |
| | | | After 15 minutes | After 30 minutes | After 15 minutes | After 30 minutes | After 15 minutes | After 30 minutes |
| Example | 6-1 | D3 | 102.5 | 87.5 | 82.5 | 77.5 | 72.5 | 62.5 |
| | 6-2 | D5 | 97.5 | 82.5 | 77.5 | 72.5 | 67.5 | 62.5 |

## Claims

**1.** Use of a dispersant for producing a hydraulic composition, wherein the dispersant comprises first and second copolymers having a structural unit derived from a monomer (a) represented by the general formula (1) below and a structural unit derived from a monomer (b) selected from monomers represented by the general formulae (2-1) and (2-2) below, the copolymers having Requirements 1 to 3:

Requirement 1:
one of $[n_A] \times x_A$ (the product of the average number of moles $[n_A]$ of added alkylene oxides and the acid-type reduced wt% ($x_A$) of (b) relative to the sum total of (a) and (b) in the first copolymer) and $[n_B] \times x_B$ (the product of the average number of moles $[n_B]$ of added alkylene oxides and the acid-type reduced wt% ($x_B$) of (b) relative to the sum total of (a) and (b) in the second copolymer) is in the range of 50 to less than 165, and the other is in the range of 165 to 1000;
Requirement 2:

both of the $x_A$ and $x_B$ are in the range of 2 to 99 wt%;
Requirement 3:
both of the $[n_A]$ and $[n_B]$ are in the range of 5 to 105;

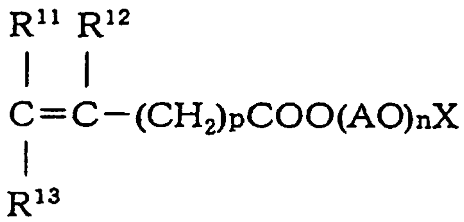

(1)

wherein $R^{11}$ and $R^{12}$ may be the same as or different from each other and each represent a hydrogen atom or $-CH_3$,
$R^{13}$ represents a hydrogen atom or $-COO(AO)_mX^{11}$,
X and $X^{11}$ may the same as or different from each other and each represent a hydrogen atom or a C1 to C18 alkyl group,
m and n may be the same as or different from each other and each represent an integer of 1 or more, and
p represent a number of 0 to 2;

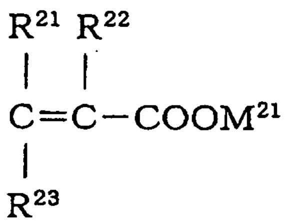

(2-1)

wherein $R^{21}$, $R^{22}$ and $R^{23}$ may be the same as or different from one another and each represent a hydrogen atom, $-CH_3$ or $(CH_2)_rCOOM^{22}$, wherein $-CH_3$ or $(CH_2)_rCOOM^{22}$ may form an anhydride with $COOM^{21}$ or other $(CH_2)_rCOOM^{22}$ whereupon $M^{21}$ and $M^{22}$ in these groups are not present,
$M^{21}$ and $M^{22}$ may be the same as or different from each
other and each represent a hydrogen atom, an alkali metal, an alkaline earth metal, an ammonium group, an alkyl ammonium
group or a substituted alkyl ammonium group, and
r represents a number of 0 to 2; and

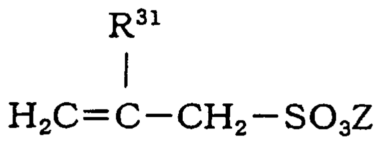

(2-2)

wherein $R^{31}$ represents a hydrogen atom or a methyl group,
and
Z represents a hydrogen atom, an alkali metal, an alkaline earth metal, an ammonium group, an alkyl ammonium group or a substituted alkyl ammonium group and wherein the hydraulic composition further contains water, cement and aggregate.

**2.** The use according to claim 1, wherein the dispersant further has Requirement 4:

Requirement 4:

the absolute difference between the $[n_A] \times x_A$ and $[n_B] \times x_B$ is 20 or more.

**3.** The use according to claim 1, wherein the dispersant has a total content of the first and second copolymers in the whole solids content of the dispersant of 50 wt.% or more.

**4.** The use according to claim 1, wherein the hydraulic composition further contains silica fume.

**5.** The use according to claim 4, wherein the cement/silica fume ratio by weight in the hydraulic composition is 97/3 to 80/20, and the total of cement and silica fume is 400 to 1300 (kg/$m^3$).

**6.** The use according to any one of claims 4 to 5 wherein the hydraulic composition has a water/hydraulic powder ratio of 40% (weight ratio) or less.

**7.** The use according to any one of claims 4 to 6,
wherein the cement is rapid-hardening Portland cement.

**8.** The use according to claims 1 to 3, whereby producing the hydraulic composition comprises the step of kneading water, cement, aggregate, and the dispersant as defined in any one of claims 1 to 3.

**Patentansprüche**

**1.** Verwendung eines Dispergiermittels zum Herstellen einer hydraulischen Zusammensetzung, worin das Dispergiermittel umfasst:

erste und zweite Copolymere mit einer Struktureinheit abgeleitet von einem Monomer (a) der allgemeinen Formel (1) unten und einer Struktureinheit abgeleitet von einem Monomer (b) ausgewählt aus Monomeren der allgemeinen Formeln (2-1) und (2-2) unten, wobei die Copolymere die Anforderungen 1 bis 3 erfüllen:

Anforderung 1:

eines aus $[n_A] \times x_A$ (Produkt aus mittlerer Molzahl $[n_A]$ der addierten Alkylenoxide und dem Säuretyp-reduzierten Gewichtsprozentwert ($x_A$) von (b) in Bezug auf die gesamte Summe von (a) und (b) im ersten Copolymer) und $[n_B] \times x_B$ (Produkt aus mittlerer Molzahl $[n_B]$ der addierten Alkylenoxide und dem Säuretyp-reduzierten Gewichtsprozentwert ($x_B$) von (b) in Bezug auf die gesamte Summe von (a) und (b) im zweiten Copolymer) ist im Bereich von 50 bis weniger als 165, und das andere ist im Bereich von 165 bis 1.000;

Anforderung 2:

sowohl $x_A$ als auch $x_B$ sind im Bereich von 2 bis 99 Gew.%;
Anforderung 3:

sowohl $x_A$ als auch $x_B$ sind im Bereich von 5 bis 105;

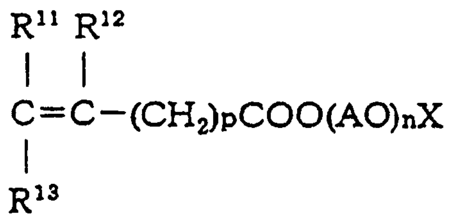 (1)

worin $R^{11}$ und $R^{12}$ gleich oder unterschiedlich sein können und jeweils ein Wasserstoffatom oder $-CH_3$ darstellen,
$R^{13}$ ein Wasserstoffatom oder $-COO(AO)_mX^{11}$ darstellt,
X und $X^{11}$ gleich oder unterschiedlich sein können und
jeweils ein Wasserstoffatom oder eine C1-C18-Alkylgruppe darstellen,
m und n gleich oder unterschiedlich sein können und
jeweils eine ganze Zahl von 1 oder mehr darstellen, und

p eine Zahl von 0 bis 2 darstellt;

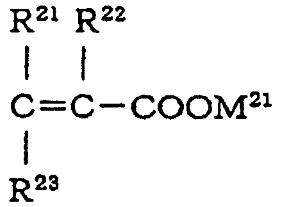

(2-1)

worin $R^{21}$, $R^{22}$ und $R^{23}$ gleich oder unterschiedlich sein können und jeweils ein Wasserstoffatom, $-CH_3$ oder $(CH_2)_rCOOM^{22}$ darstellen, worin $-CH_3$ oder $(CH_2)_rCOOM^{22}$ ein Anhydrid mit $COOM^{21}$ oder anderen $(CH_2)_rCOOM^{22}$ bilden können, wobei dann $M^{21}$ und $M^{22}$ in diesen Gruppen nicht vorhanden sind,
$M^{21}$ und $M^{22}$ gleich oder unterschiedlich sein können und
jeweils ein Wasserstoffatom, ein Alkalimetall, ein Erdalkalimetall, eine Ammoniumgruppe, eine Alkylammoniumgruppe oder eine substituierte Alkylammoniumgruppe darstellen und
r eine Zahl von 0 bis 2 darstellt; und

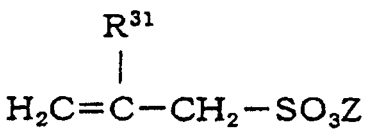

(2-2)

worin $R^{31}$ ein Wasserstoffatom oder eine Methylgruppe darstellt und
Z ein Wasserstoffatom, ein Alkalimetall, ein Erdalkalimetall, eine Ammoniumgruppe, eine Alkylammoniumgruppe oder eine substituierte Alkylammoniumgruppe darstellt, und worin die hydraulische Zusammensetzung weiterhin Wasser, Zement und Aggregate enthält.

**2.** Verwendung gemäß Anspruch 1, worin das Dispergiermittel weiterhin die Anforderung 4 erfüllen:

Anforderung 4:

die absolute Differenz zwischen $[n_A]$ x $x_A$ und $[n_B]$ x $x_B$ ist 20 oder mehr.

**3.** Verwendung gemäß Anspruch 1, worin das Dispergiermittel einen gesamten Gehalt der ersten und zweiten Copolymere im gesamten Feststoffgehalt des Dispergiermittels von 50 Gew.% oder mehr hat.

**4.** Verwendung gemäß Anspruch 1, worin die hydraulische Zusammensetzung weiterhin Siliziumdioxidstaub enthält.

**5.** Verwendung gemäß Anspruch 4, worin das Zement/Siliziumdioxidstaub-Gewichtsverhältnis in der hydraulischen Zusammensetzung 97/3 bis 80/20 ist, und die Gesamtmenge an Zement und Siliziumdioxidstaub 40 bis 1.300 (kg/$m^3$) ist.

**6.** Verwendung gemäß irgendeinem der Ansprüche 4 bis 5, worin die hydraulische Zusammensetzung ein Wasser/hydraulisches Pulver-Verhältnis von 40 % (Gewichtsverhältnis) oder weniger hat.

**7.** Verwendung gemäß irgendeinem der Ansprüche 4 bis 6, worin der Zement schnellhärtender Portland-Zement ist.

**8.** Verwendung gemäß den Ansprüchen 1 bis 3, wobei das Herstellen der hydraulischen Zusammensetzung den Schritt des Knetens von Wasser, Zement, Aggregaten und des Dispergiermittels wie in irgendeinem der Ansprüche 1 bis 3 definiert, umfasst.

## Revendications

**1.** Utilisation d'un dispersant pour produire une composition hydraulique, dans laquelle le dispersant comprend

des premier et deuxième copolymères présentant une unité structurale dérivée d'un momonère (a) représenté par la formule générale (1) ci-dessous et une unité structurale dérivée d'un momonère (b) choisi parmi les momonères représentés par les formules générales (2-1) et (2-2) ci-dessous, les copolymères répondant aux exigences 1 à 3 :

Exigence 1 :

l'un de $[n_A]$ x $x_A$ (le produit du nombre moyen de moles $[n_A]$ d'oxydes d'alkylène ajoutés et du % en poids réduit de type acide ($x_A$) de (b) par rapport à la somme totale de (a) et (b) dans le premier copolymère) et de $[n_B]$ x $x_B$ (le produit du nombre moyen de moles $[n_B]$ d'oxydes d'alkylène ajoutés et du % en poids réduit de type acide ($x_B$) de (b) par rapport à la somme totale de (a) et (b) dans le deuxième copolymère) est situé dans la plage de 50 à moins de 165, et l'autre est situé dans la plage de 165 à 1 000 ;

Exigence 2 :

$x_A$ et $x_B$ sont tous deux situés dans la plage de 2 à 99 % en poids ;

Exigence 3 :

$[n_A]$ et $[n_B]$ sont tous deux situés dans la plage de 5 à 105 ;

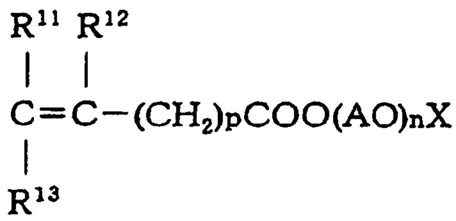

(1)

dans laquelle $R^{11}$ et $R^{12}$ peuvent être identiques ou différents l'un de l'autre et représentent chacun un atome d'hydrogène ou $-CH_3$,
$R^{13}$ représente un atome d'hydrogène ou un groupe - COO $(AO)_mX^{11}$,
X et $X^{11}$ peuvent être identiques ou différents l'un de l'autre et représentent chacun un atome d'hydrogène ou un groupe alkyle en $C_1$ à $C_{18}$,
m et n peuvent être identiques ou différents l'un de l'autre et représentent chacun un nombre entier supérieur ou égal à 1, et
p représente un nombre de 0 à 2 ;

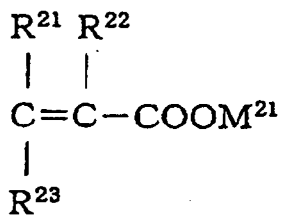

(2-1)

dans laquelle $R^{21}$, $R^{22}$ et $R^{23}$ peuvent être identiques ou différents l'un de l'autre et représentent chacun un atome d'hydrogène ou un groupe $-CH_3$ ou $(CH_2)_rCOOM^{22}$, dans laquelle les groupes $-CH_3$ ou $(CH_2)_rCOOM^{22}$ peuvent former un anhydride avec le groupe $COOM^{21}$ ou un autre groupe $(CH_2)_rCOOM^{22}$ sur quoi $M^{21}$ et $M^{22}$ dans ces groupes ne sont pas présents,
$M^{21}$ et $M^{22}$ peuvent être identiques ou différents l'un de l'autre et représentent chacun un atome d'hydrogène, un métal alcalin, un métal alcalino-terreux, un groupe ammonium, un groupe alkyl-ammonium ou un groupe alkyl-ammonium substitué,
et
r représente un nombre de 0 à 2 ; et

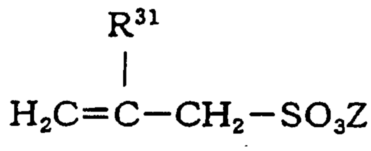 (2-2)

dans laquelle $R^{31}$ représente un atome d'hydrogène ou un groupe méthyle, et
Z représente un atome d'hydrogène, un métal alcalin, un métal alcalino-terreux, un groupe ammonium, un groupe alkyl-ammonium ou un groupe alkyl-ammonium substitué et dans laquelle la composition hydraulique contient en outre de l'eau, du ciment et un agrégat.

**2.** Utilisation selon la revendication 1, dans laquelle le dispersant répond en outre à l'exigence 4 :

Exigence 4 :

la différence absolue entre le produit $[n_A] \times x_A$ et le produit $[n_B] \times x_B$ est supérieur ou égal à 20.

**3.** Utilisation selon la revendication 1, dans laquelle le dispersant présente une teneur totale des premier et deuxième copolymères dans la teneur totale en solides du dispersant supérieure ou égale à 50 % en poids.

**4.** Utilisation selon la revendication 1, dans laquelle la composition hydraulique contient en outre de la fumée de silice.

**5.** Utilisation selon la revendication 4, dans laquelle le rapport ciment/fumée de silice en poids dans la composition hydraulique est de 97/3 à 80/20, et le total du ciment et de la fumée de silice est de 400 à 1 300 ($kg/m^3$).

**6.** Utilisation selon l'une quelconque des revendications 4 à 5 dans laquelle la composition hydraulique présente un rapport eau/poudre hydraulique inférieur ou égal à 40 % (rapport pondéral).

**7.** Utilisation selon l'une quelconque des revendications 4 à 6, dans laquelle le ciment est un ciment Portland à prise rapide.

**8.** Utilisation selon les revendications 1 à 3, moyennant quoi la production de la composition hydraulique comprend l'étape consistant à malaxer de l'eau, du ciment, un agrégat et le dispersant tel que défini selon l'une quelconque des revendications 1 à 3.

Fig. 1

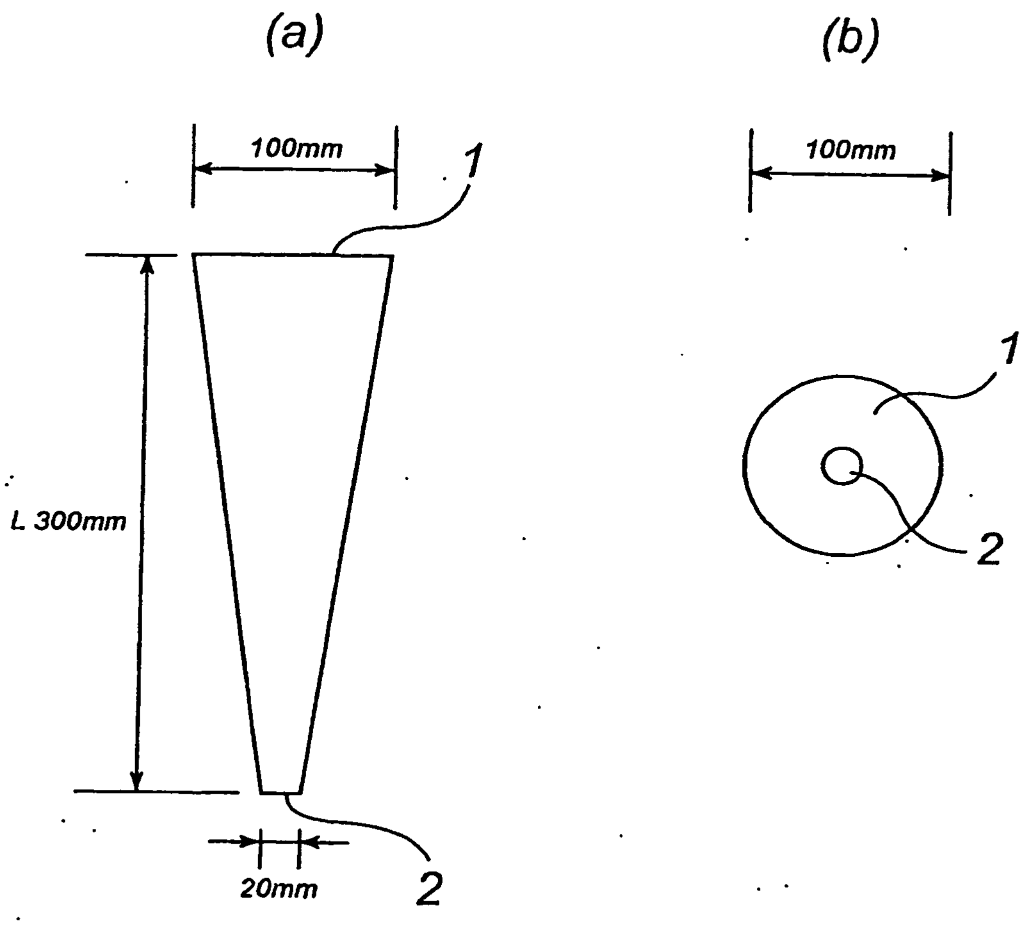

Fig. 2

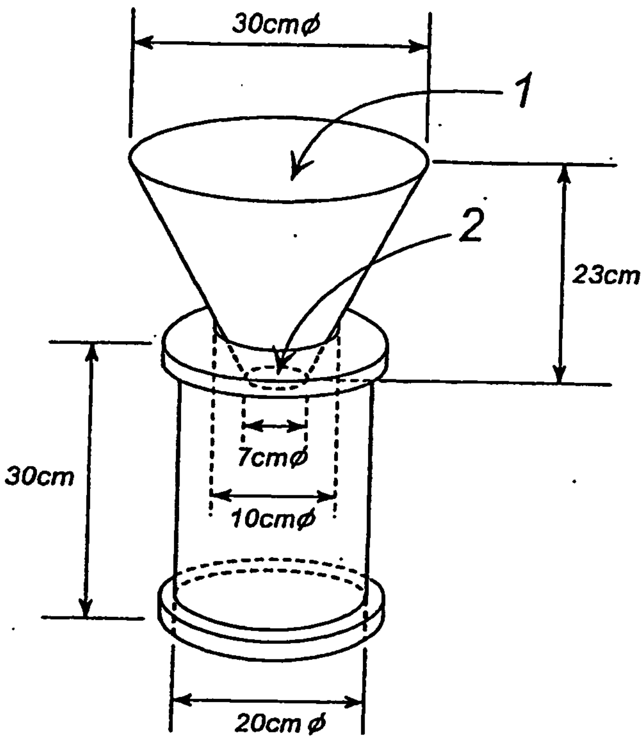

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11268940 A
- JP 11171619 A
- JP 2001322854 A
- JP 6191918 A
- JP 7304014 A
- EP 1110981 A2
- EP 0792850 A1
- JP 11157897 A


### Non-patent literature cited in the description


- Konkurito Konwazai No Kaihatsu Gijyutsu. CMC Inc, 1998, 94-107
- Konkurito Konwazai No Kaihatsu Gijyutsu. CMC Inc, 1998, 58-69
- Concrete Library 93: Highly Fluidic Concrete Operation Guideline. Civil Engineering Society, 160-161